(19) 

Europäisches
Patentamt
European
Patent Office
Office européen
des brevets

(11) **EP 4 266 614 A1**

(12) **EUROPEAN PATENT APPLICATION**
published in accordance with Art. 153(4) EPC

(43) Date of publication:
**25.10.2023 Bulletin 2023/43**

(21) Application number: **21907121.4**

(22) Date of filing: **16.12.2021**

(51) International Patent Classification (IPC):
**H04L 5/00** *(2006.01)*   **H04L 1/00** *(2006.01)*

(52) Cooperative Patent Classification (CPC):
**H04L 1/00; H04L 5/00**

(86) International application number:
**PCT/KR2021/019175**

(87) International publication number:
**WO 2022/131817 (23.06.2022 Gazette 2022/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.12.2020 US 202063126850 P
17.12.2020 US 202063126853 P**

(71) Applicant: **LG Electronics Inc.
Yeongdeungpo-gu
Seoul 07336 (KR)**

(72) Inventors:
• **KIM, Kyuseok
Seoul 06772 (KR)**
• **PARK, Haewook
Seoul 06772 (KR)**
• **KANG, Jiwon
Seoul 06772 (KR)**
• **CHA, Hyunsu
Seoul 06772 (KR)**

(74) Representative: **Frenkel, Matthias Alexander
Wuesthoff & Wuesthoff
Patentanwälte PartG mbB
Schweigerstraße 2
81541 München (DE)**

(54) **METHOD FOR TRANSMITTING AND RECEIVING CSI-RS AND DEVICE FOR SAME IN WIRELESS COMMUNICATION SYSTEM**

(57)     A method of transmitting and receiving a channel state information-reference signal (CSI-RS) and a device therefor in a wireless communication system are disclosed. The method performed by a user equipment comprises receiving, from a base station, configuration information for a CSI-RS resource, determining at least one code division multiplexing (CDM) group based on the configuration information, constructing CDM group sets based on the at least one CDM group, determining a physical resource block (PRB) related to the CDM group sets, and receiving, from the base station, the CSI-RS based on the CDM group sets in the PRB. P

【FIG. 19】

**EP 4 266 614 A1**

**Description**

[Technical Field]

The present disclosure relates to a wireless communication system, and more particularly to a method of transmitting and receiving a channel state information-reference signal (CSI-RS) and a device therefor.

[Background Art]

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.
Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.
In order to improve a reference signal (RS) estimation performance, a technique of reducing a frequency density of CSI-RS for CSI estimation compared to the existing method is being discussed.

[Disclosure]

[Technical Problem]

The present disclosure provides a method and device for reducing an actual frequency density of a CSI-RS to less than or equal to 0.5.
The present disclosure provides a method and device for constructing a code division multiplexing (CDM) group set.
The present disclosure provides a method and device for allowing a different physical resource block (PRB) to correspond to each CDM group set.
The present disclosure provides a method and device for flexibly adjusting an actual frequency density by controlling the number of CDM groups constructing a CDM group set.
Technical objects to be achieved by the present disclosure are not limited to the aforementioned technical objects, and other technical objects not described above may be evidently understood by a person having ordinary skill in the art to which the present disclosure pertains from the following description.

[Technical Solution]

In one aspect of the present disclosure, there is provided a method of a user equipment (UE) to receive a channel state information-reference signal (CSI-RS) in a wireless communication system. The method comprises receiving, from a base station, configuration information for a CSI-RS resource, the configuration information including information on a number of antenna ports, information on a density, and information on a code division multiplexing (CDM) type, determining at least one CDM group based on the configuration information, constructing CDM group sets based on the at least one CDM group, determining a physical resource block (PRB) related to the CDM group sets, wherein a different CDM group set is related to a different PRB, and receiving, from the base station, the CSI-RS based on the CDM group sets in the PRB.
Determining the CDM group sets may comprise receiving, from the base station, information on a CDM group set, wherein the information on the CDM group set represents a number of CDM groups related to the same PRB, and constructing the CDM group sets with the at least one CDM group based on the information on the CDM group set.
The configuration information may further include information on a frequency domain location and/or information on a time domain location, and the CDM group sets may be constructed based on a frequency domain location and/or a time domain location of the at least one CDM group.
Determining the PRB may comprise receiving, from the base station, resource information on a CDM group set, the resource information including bitmaps representing a PRB related to each CDM group set within the CSI-RS resource, and determining the PRB related to the CDM group sets based on the bitmaps.
The CDM group sets may include a first CDM group set and a second CDM group set. The first CDM group set may be related to an odd-numbered PRB within the CSI-RS resource, and the second CDM group set may be related to an even-numbered PRB within the CSI-RS resource.

A sequence of the CSI-RS may be generated based on a PRB related to at least one CDM group set.

In another aspect of the present disclosure, there is provided a user equipment (UE) configured to receive a channel state information-reference signal (CSI-RS) in a wireless communication system, the UE comprising at least one transceiver, at least one processor, and at least one memory operably connected to the at least one processor, wherein the at least one memory is configured to store instructions performing operations based on being executed by the at least one processor, wherein the operations comprise receiving, from a base station, configuration information for a CSI-RS resource, the configuration information including information on a number of antenna ports, information on a density, and information on a code division multiplexing (CDM) type, determining at least one CDM group based on the configuration information, constructing CDM group sets based on the at least one CDM group, determining a physical resource block (PRB) related to the CDM group sets, wherein a different CDM group set is related to a different PRB, and receiving, from the base station, the CSI-RS based on the CDM group sets in the PRB.

In another aspect of the present disclosure, there is provided a method of a base station to transmit a channel state information-reference signal (CSI-RS) in a wireless communication system, the method comprising transmitting, to a user equipment (UE), configuration information for a CSI-RS resource, the configuration information including information on a number of antenna ports, information on a density, and information on a code division multiplexing (CDM) type, determining at least one CDM group based on the configuration information, constructing CDM group sets based on the at least one CDM group, determining a physical resource block (PRB) related to the CDM group sets, wherein a different CDM group set is related to a different PRB, and transmitting, to the UE, the CSI-RS based on the CDM group sets in the PRB.

Constructing the CDM group sets may comprise transmitting, to the UE, information on a CDM group set, wherein the information on the CDM group set represents a number of CDM groups related to the same PRB, and constructing the CDM group sets with the at least one CDM group based on the information on the CDM group set.

The configuration information may further include information on a frequency domain location and/or information on a time domain location. The CDM group sets may be constructed based on a frequency domain location and/or a time domain location of the at least one CDM group.

Determining the PRB may comprise transmitting, to the UE, resource information on a CDM group set, the resource information including bitmaps representing a PRB related to each CDM group set within the CSI-RS resource, and determining the PRB related to the CDM group sets based on the bitmaps.

The CDM group sets may include a first CDM group set and a second CDM group set. The first CDM group set may be related to an odd-numbered PRB within the CSI-RS resource, and the second CDM group set may be related to an even-numbered PRB within the CSI-RS resource.

A sequence of the CSI-RS may be generated based on a PRB related to at least one CDM group set.

In another aspect of the present disclosure, there is provided a base station configured to transmit a channel state information-reference signal (CSI-RS) in a wireless communication system, the base station comprising at least one transceiver, at least one processor, and at least one memory operably connected to the at least one processor, wherein the at least one memory is configured to store instructions performing operations based on being executed by the at least one processor, wherein the operations comprise transmitting, to a user equipment (UE), configuration information for a CSI-RS resource, the configuration information including information on a number of antenna ports, information on a density, and information on a code division multiplexing (CDM) type, determining at least one CDM group based on the configuration information, constructing CDM group sets based on the at least one CDM group, determining a physical resource block (PRB) related to the CDM group sets, wherein a different CDM group set is related to a different PRB, and transmitting, to the UE, the CSI-RS based on the CDM group sets in the PRB.

In another aspect of the present disclosure, there is provided a processing apparatus configured to control a user equipment (UE) to receive a channel state information-reference signal (CSI-RS) in a wireless communication system, the processing apparatus comprising at least one processor and at least one memory operably connected to the at least one processor, wherein the at least one memory is configured to store instructions performing operations based on being executed by the at least one processor, wherein the operations comprise receiving, from a base station, configuration information for a CSI-RS resource, the configuration information including information on a number of antenna ports, information on a density, and information on a code division multiplexing (CDM) type, determining at least one CDM group based on the configuration information, constructing CDM group sets based on the at least one CDM group, determining a physical resource block (PRB) related to the CDM group sets, wherein a different CDM group set is related to a different PRB, and receiving, from the base station, the CSI-RS based on the CDM group sets in the PRB.

In another aspect of the present disclosure, there is provided a computer readable storage medium storing at least one instruction allowing at least one processor to control operation based on being executed by the at least one processor, wherein the operations comprise receiving, from a base station, configuration information for a channel state information-reference signal (CSI-RS) resource, the configuration information including information on a number of antenna ports, information on a density, and information on a code division multiplexing (CDM) type, determining at least one CDM group based on the configuration information, constructing CDM group sets based on the at least one CDM group, determining a physical resource block (PRB) related to the CDM group sets, wherein a different CDM group set is related to a different PRB, and receiving, from the base station, the CSI-RS based on the CDM group sets in the PRB.

[Advantageous Effects]

The present disclosure has an effect of reducing an actual frequency density of a CSI-RS to less than or equal to 0.5.

The present disclosure has an effect of constructing a CDM group set.

The present disclosure has an effect of allowing a different PRB to correspond to each CDM group set.

The present disclosure has an effect of flexibly adjusting an actual frequency density by controlling the number of CDM groups constructing a CDM group set.

Effects which may be obtained by the present disclosure are not limited to the aforementioned effects, and other technical effects not described above may be evidently understood by a person having ordinary skill in the art to which the present disclosure pertains from the following description.

[Description of Drawings]

The accompany drawings, which are included to provide a further understanding of the present disclosure and are incorporated on and constitute a part of the present disclosure illustrate embodiments of the present disclosure and together with the description serve to explain the principles of the present disclosure.

FIG. 1 is a diagram illustrating an example of an overall system structure of NR to which a method proposed in the present disclosure is applicable.

FIG. 2 illustrates a relationship between an uplink frame and a downlink frame in a wireless communication system to which a method proposed in the present disclosure is applicable.

FIG. 3 illustrates an example of a frame structure in an NR system.

FIG. 4 illustrates an example of a resource grid supported by a wireless communication system to which a method proposed in the present disclosure is applicable.

FIG. 5 illustrates a slot structure of an NR frame to which a method proposed in the present disclosure is applicable.

FIG. 6 illustrates examples of a resource grid for each antenna port and numerology to which a method proposed in the disclosure is applicable.

FIG. 7 illustrates physical channels and general signal transmission.

FIG. 8 is a flowchart illustrating an example of a CSI-related procedure.

FIG. 9 illustrates an RS pattern in a single CSI-RS resource defined according to the current standard.

FIG. 10 illustrates an RS pattern in a single CSI-RS resource defined according to a proposed method.

FIG. 11 illustrates an example of a bit-map scheme.

FIG. 12 illustrates an example of a method of defining a CDM group set based on a time domain location and/or frequency domain location of a CDM group.

FIG. 13 illustrates an example of a method of reducing an average RS overhead using a time domain.

FIG. 14 illustrates an example of applying a CSI-RS sequence generating method defined in the current standard.

FIG. 15 illustrates an example of a method of repeatedly transmitting a CSI-RS port within the same slot.

FIG. 16 illustrates an example of determining whether or not to perform actual repeated transmission/the number of actual repeated transmissions/offset between actual repeated transmission time points based on CGS.

FIG. 17 illustrates an example of a difference in a sampling time between a base station and a UE.

FIG. 18 illustrates a difference between a current standard operation and a proposed method.

FIG. 19 is a flow chart illustrating an operation method of a UE described in the present disclosure.

FIG. 20 is a flow chart illustrating an operation method of a base station described in the present disclosure.

FIG. 21 illustrates a communication system applied to the present disclosure.

FIG. 22 illustrates a wireless device applicable to the present disclosure.

FIG. 23 illustrates another example of a wireless device applied to the present disclosure.

FIG. 24 illustrates a portable device applied to the present disclosure.

[Mode for Disclosure]

Reference will now be made in detail to embodiments of the present disclosure, examples of which are illustrated in the accompanying drawings. A detailed description to be disclosed below together with the accompanying drawing is to describe exemplary embodiments of the present disclosure and not to describe a unique embodiment for carrying out the present disclosure. The detailed description below includes details to provide a complete understanding of the present disclosure. However, those skilled in the art know that the present disclosure may be carried out without the details.

In some cases, in order to prevent a concept of the present disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the present disclosure is described based on the 3GPP communication system (e.g., LTE-A or NR), but the technical spirit of the present disclosure are not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system, "xxx" means a detailed standard document number. The LTE/NR may be collectively referred to as the 3GPP system. Matters disclosed in a standard document opened before the present disclosure may be referred to for a background art, terms, omissions, etc., used for describing the present disclosure. For example, the following documents may be referred to.

## 3GPP LTE

- 36.211: Physical channels and modulation
- 36.212: Multiplexing and channel coding
- 36.213: Physical layer procedures
- 36.300: Overall description
- 36.331: Radio Resource Control (RRC)

## 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 36.331: Radio Resource Control (RRC) protocol specification

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/LTE sensitive to reliability and latency is being discussed. The introduction of next generation radio access technology considering enhanced mobile broadband communication (eMBB), massive MTC (mMTC), ultra-reliable and low latency communication (URLLC) is discussed, and in the present disclosure, the technology is called new RAT for convenience. The NR is an expression representing an example of 5G radio access technology (RAT).

Three major requirement areas of 5G include (1) an enhanced mobile broadband (eMBB) area, (2) a massive machine type communication (mMTC) area and (3) an ultra-reliable and low latency communications (URLLC) area.

Some use cases may require multiple areas for optimization, and other use case may be focused on only one key performance indicator (KPI). 5G support such various use cases in a flexible and reliable manner.

eMBB is far above basic mobile Internet access and covers media and entertainment applications in abundant bidirectional tasks, cloud or augmented reality. Data is one of key motive powers of 5G, and dedicated voice services may not be first seen in the 5G era. In 5G, it is expected that voice will be processed as an application program using a data connection simply provided by a communication system. Major causes for an increased traffic volume include an increase in the content size and an increase in the number of applications that require a high data transfer rate. Streaming service (audio and video), dialogue type video and mobile Internet connections will be used more widely as more devices are connected to the Internet. Such many application programs require connectivity always turned on in order to push real-time information and notification to a user. A cloud storage and application suddenly increases in the mobile communication platform, and this may be applied to both business and entertainment. Furthermore, cloud storage is a special use case that tows the growth of an uplink data transfer rate. 5G is also used for remote business of cloud. When a tactile interface is used, further lower end-to-end latency is required to maintain excellent user experiences. Entertainment, for example, cloud game and video streaming are other key elements which increase a need for the mobile broadband ability. Entertainment is essential in the smartphone and tablet anywhere including high mobility environments, such as a train, a vehicle and an airplane. Another use case is augmented reality and information search for entertainment. In this case, augmented reality requires very low latency and an instant amount of data.

Furthermore, one of the most expected 5G use case relates to a function capable of smoothly connecting embedded sensors in all fields, that is, mMTC. Until 2020, it is expected that potential IoT devices will reach 20.4 billions. The industry IoT is one of areas in which 5G performs major roles enabling smart city, asset tracking, smart utility, agriculture and security infra.

URLLC includes a new service which will change the industry through remote control of major infra and a link having ultra-reliability/low available latency, such as a self-driving vehicle. A level of reliability and latency is essential for smart grid control, industry automation, robot engineering, drone control and adjustment.

Multiple use cases are described more specifically.

5G may supplement fiber-to-the-home (FTTH) and cable-based broadband (or DOCSIS) as means for providing a stream evaluated from gigabits per second to several hundreds of mega bits per second. Such fast speed is necessary to deliver TV with resolution of 4K or more (6K, 8K or more) in addition to virtual reality and augmented reality. Virtual reality (VR) and augmented reality (AR) applications include immersive sports games. A specific application program may require a special network configuration. For example, in the case of VR game, in order for game companies to minimize latency, a core server may need to be integrated with the edge network server of a network operator.

An automotive is expected to be an important and new motive power in 5G, along with many use cases for the mobile communication of an automotive. For example, entertainment for a passenger requires a high capacity and a high mobility mobile broadband at the same time. The reason for this is that future users continue to expect a high-quality connection regardless of their location and speed. Another use example of the automotive field is an augmented reality dashboard. The augmented reality dashboard overlaps and displays information, identifying an object in the dark and notifying a driver of the distance and movement of the object, over a thing seen by the driver through a front window. In the future, a wireless module enables communication between automotives, information exchange between an automotive and a supported infrastructure, and information exchange between an automotive and other connected devices (e.g., devices accompanied by a pedestrian). A safety system guides alternative courses of a behavior so that a driver may drive more safely, thereby reducing a danger of an accident. A next step will be a remotely controlled or self-driven vehicle. This requires very reliable, very fast communication between different self-driven vehicles and between an automotive and infra. In the future, a self-driven vehicle may perform all driving activities, and a driver will be focused on things other than traffic, which cannot be identified by an automotive itself. Technical requirements of a self-driven vehicle require ultra-low latency and ultra-high speed reliability so that traffic safety is increased up to a level which cannot be achieved by a person.

A smart city and smart home mentioned as a smart society will be embedded as a high-density radio sensor network. The distributed network of intelligent sensors will identify the cost of a city or home and a condition for energy-efficient maintenance. A similar configuration may be performed for each home. All of a temperature sensor, a window and heating controller, a burglar alarm and home appliances are wirelessly connected. Many of such sensors are typically a low data transfer rate, low energy and a low cost. However, for example, real-time HD video may be required for a specific type of device for surveillance.

The consumption and distribution of energy including heat or gas are highly distributed and thus require automated control of a distributed sensor network. A smart grid collects information, and interconnects such sensors using digital information and a communication technology so that the sensors operate based on the information. The information may include the behaviors of a supplier and consumer, and thus the smart grid may improve the distribution of fuel, such as electricity, in an efficient, reliable, economical, production-sustainable and automated manner. The smart grid may be considered to be another sensor network having small latency.

A health part owns many application programs which reap the benefits of mobile communication. A communication system may support remote treatment providing clinical treatment at a distant place. This helps to reduce a barrier for the distance and may improve access to medical services which are not continuously used at remote farming areas. Furthermore, this is used to save life in important treatment and an emergency condition. A radio sensor network based on mobile communication may provide remote monitoring and sensors for parameters, such as the heart rate and blood pressure.

Radio and mobile communication becomes increasingly important in the industry application field. Wiring requires a high installation and maintenance cost. Accordingly, the possibility that a cable will be replaced with reconfigurable radio links is an attractive opportunity in many industrial fields. However, to achieve the possibility requires that a radio connection operates with latency, reliability and capacity similar to those of the cable and that management is simplified. Low latency and a low error probability is a new requirement for a connection to 5G.

Logistics and freight tracking is an important use case for mobile communication, which enables the tracking inventory and packages anywhere using a location-based information system. The logistics and freight tracking use case typically requires a low data speed, but a wide area and reliable location information.

In a new RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. Different numerologies may be defined by scaling reference subcarrier spacing to an integer N.

## Definition of terms

eLTE eNB: The eLTE eNB is the evolution of eNB that supports connectivity to EPC and NGC.

gNB: A node which supports the NR as well as connectivity to NGC.

New RAN: A radio access network which supports either NR or E-UTRA or interfaces with the NGC.

Network slice: A network slice is a network created by the operator customized to provide an optimized solution for a specific market scenario which demands specific requirements with end-to-end scope.

Network function: A network function is a logical node within a network infrastructure that has well-defined external interfaces and well-defined functional behavior.

NG-C: A control plane interface used on NG2 reference points between new RAN and NGC.

NG-U: A user plane interface used on NG3 references points between new RAN and NGC.

Non-standalone NR: A deployment configuration where the gNB requires an LTE eNB as an anchor for control plane connectivity to EPC, or requires an eLTE eNB as an anchor for control plane connectivity to NGC.

Non-standalone E-UTRA: A deployment configuration where the eLTE eNB requires a gNB as an anchor for control plane connectivity to NGC.

User plane gateway: A termination point of NG-U interface.

## Overview of system

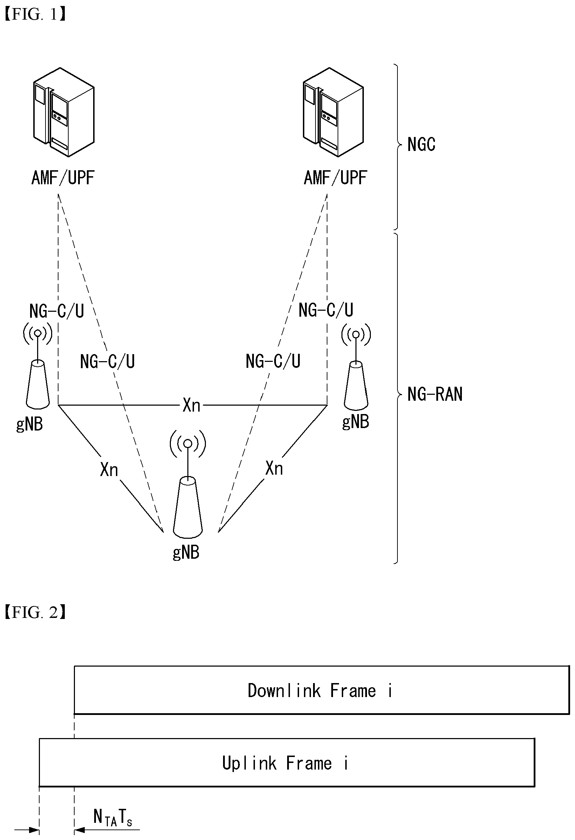

FIG. 1 illustrates an example of an overall structure of a NR system to which a method proposed in the present disclosure is applicable.

Referring to FIG. 1, an NG-RAN consists of gNBs that provide an NG-RA user plane (new AS sublayer/PDCP/RLC/MAC/PHY) and control plane (RRC) protocol terminations for a user equipment (UE).

The gNBs are interconnected with each other by means of an Xn interface.

The gNBs are also connected to an NGC by means of an NG interface.

More specifically, the gNBs are connected to an access and mobility management function (AMF) by means of an N2 interface and to a user plane function (UPF) by means of an N3 interface.

## New Rat (NR) Numerology and Frame Structure

In the NR system, multiple numerologies may be supported. The numerologies may be defined by subcarrier spacing and a CP (Cyclic Prefix) overhead. Spacing between the plurality of subcarriers may be derived by scaling basic subcarrier spacing into an integer N (or $\mu$). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1.

[Table 1]

| $\mu$ | $\Delta f = 2^{\mu} \cdot 15\,[\text{kHz}]$ | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.

An NR frequency band is defined as frequency ranges of two types (FR1 and FR2). FR1 and FR2 may be configured as shown in Table 2 below. Further, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in the NR system, a size of various fields in the time domain is expressed as a multiple of a time unit of $T_s = 1/(\Delta f_{max} \cdot N_f)$. In this case, $\Delta f_{max} = 480 \cdot 10^3$, and $N_f = 4096$. DL and UL transmission is configured as a radio frame having a section of $T_f = (\Delta f_{max} N_f / 100) \cdot T_s = 10$ms. The radio frame is composed of ten subframes each having a section of $T_{sf} = (\Delta f_{max} N_f / 1000) \cdot T_s = 1$ms. In this case, there may be a set of UL frames and a set of DL frames.

FIG. 2 illustrates a relation between an uplink frame and a downlink frame in a wireless communication system to which a method proposed in the present disclosure is applicable.

As illustrated in FIG. 2, uplink frame number i for transmission from a user equipment (UE) shall start $T_{TA} = N_{TA} T_s$ before the start of a corresponding downlink frame at the corresponding UE.

Regarding the numerology $\mu$, slots are numbered in increasing order of $n_s^{\mu} \in \left\{ 0, ..., N_{\text{subframe}}^{\text{slots}, \mu} - 1 \right\}$ within a subframe and are numbered in increasing order of $n_{s,f}^{\mu} \in \left\{ 0, ..., N_{\text{frame}}^{\text{slots}, \mu} - 1 \right\}$ within a radio frame. One slot consists of consecutive OFDM symbols of $N_{\text{symb}}^{\mu}$, and $N_{\text{symb}}^{\mu}$ is determined depending on a numerology used and slot configuration. The start of slots $n_s^{\mu}$ in a subframe is aligned in time with the start of OFDM symbols $n_s^{\mu} N_{\text{symb}}^{\mu}$ in the same subframe.

Not all UEs are able to transmit and receive at the same time, and this means that not all OFDM symbols in a downlink slot or an uplink slot are available to be used.

Table 3 represents the number $N_{\text{symb}}^{\text{slot}}$ of OFDM symbols per slot, the number $N_{\text{slot}}^{\text{frame, }\mu}$ of slots per radio frame, and the number $N_{\text{slot}}^{\text{subframe, }\mu}$ of slots per subframe in a normal CP. Table 4 represents the number of OFDM symbols per slot, the number of slots per radio frame, and the number of slots per subframe in an extended CP.

[Table 3]

| $\mu$ | $N_{\text{symb}}^{\text{slot}}$ | $N_{\text{slot}}^{\text{frame,}\mu}$ | $N_{\text{slot}}^{\text{subframe,}\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{\text{symb}}^{\text{slot}}$ | $N_{\text{slot}}^{\text{frame,}\mu}$ | $N_{\text{slot}}^{\text{subframe,}\mu}$ |
|---|---|---|---|
| 2 | 12 | 40 | 4 |

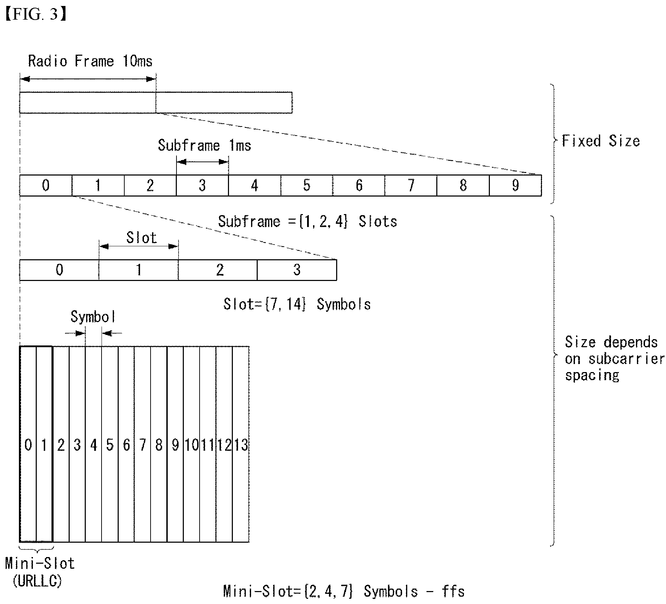

FIG. 3 illustrates an example of a frame structure in a NR system. FIG. 3 is merely for convenience of explanation and does not limit the scope of the present disclosure.

In Table 4, in case of $\mu$=2, i.e., as an example in which a subcarrier spacing (SCS) is 60 kHz, one subframe (or frame) may include four slots with reference to Table 3, and one subframe = {1, 2, 4} slots shown in FIG. 3, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. May be considered.

Hereinafter, the above physical resources that may be considered in the NR system are described in more detail.

First, in regard to an antenna port, the antenna port is defined so that a channel over which a symbol on an antenna port is conveyed may be inferred from a channel over which another symbol on the same antenna port is conveyed. When large-scale properties of a channel over which a symbol on one antenna port is conveyed may be inferred from a channel over which a symbol on another antenna port is conveyed, the two antenna ports may be regarded as being in a quasi co-located or quasi co-location (QC/QCL) relation. Here, the large-scale properties may include at least one of delay spread, Doppler spread, frequency shift, average received power, and received timing.

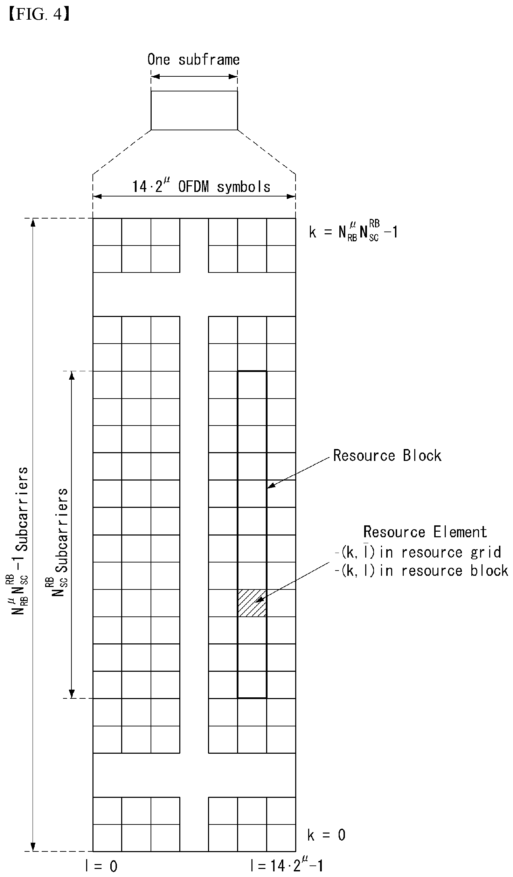

FIG. 4 illustrates an example of a resource grid supported in a wireless communication system to which a method proposed in the present disclosure is applicable.

Referring to FIG. 4, a resource grid consists of $N_{\text{RB}}^{\mu} N_{\text{sc}}^{\text{RB}}$ subcarriers on a frequency domain, each subframe consisting of $14 \cdot 2^{\mu}$ OFDM symbols, but the present disclosure is not limited thereto.

In the NR system, a transmitted signal is described by one or more resource grids, consisting of $N_{\text{RB}}^{\mu} N_{\text{sc}}^{\text{RB}}$ subcarriers, and $2^{\mu} N_{\text{symb}}^{(\mu)}$ OFDM symbols, where $N_{\text{RB}}^{\mu} \le N_{\text{RB}}^{\text{max, }\mu}$. $N_{\text{RB}}^{\text{max, }\mu}$ denotes a maximum transmission bandwidth and may change not only between numerologies but also between uplink and downlink.

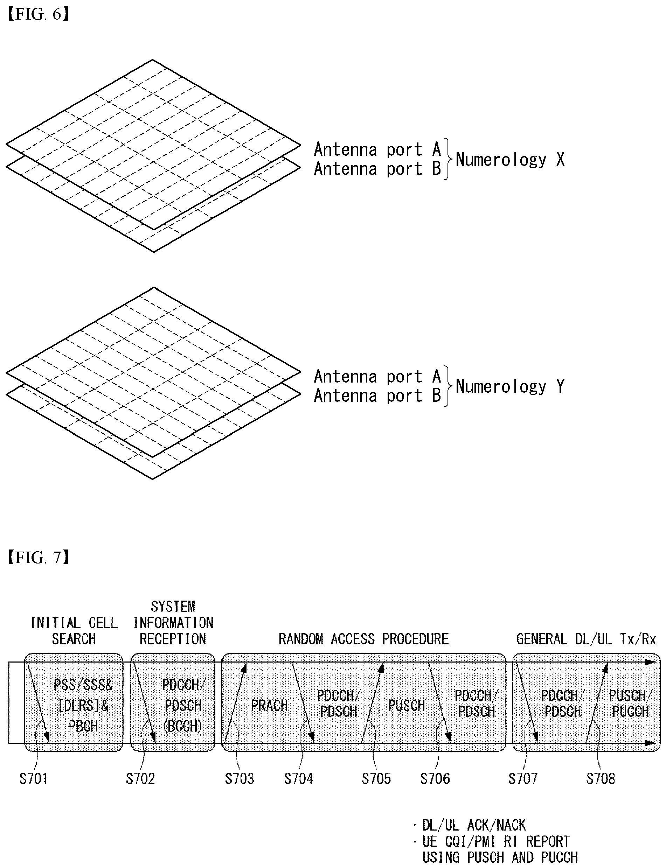

In this case, as illustrated in FIG. 6, one resource grid may be configured per numerology $\mu$ and antenna port p.

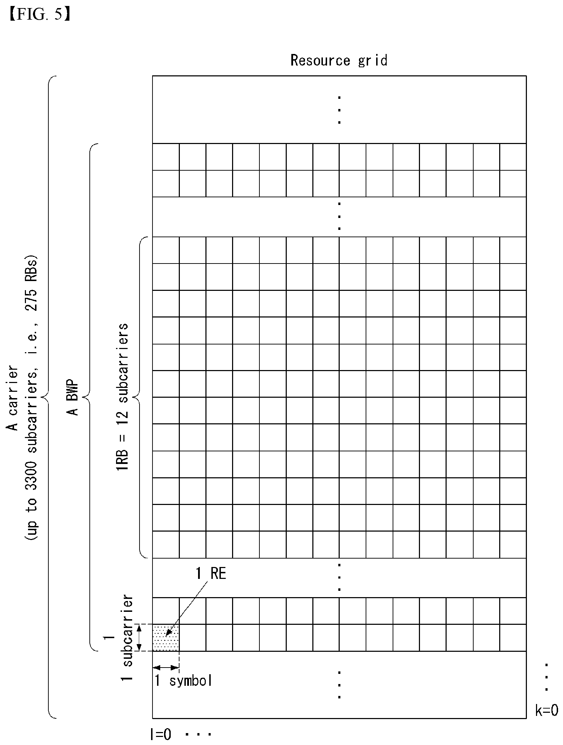

FIG. 5 illustrates a slot structure of an NR frame to which a method proposed in the present disclosure is applicable.

A slot includes a plurality of symbols in a time domain. For example, one slot includes 7 symbols in a normal CP, while one slot includes 6 symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., 5) BWPs. The data communication may be performed through an activated BWP, and only one BWP may be activated in one UE. In a resource grid, each element is referred to as a resource element (RE), and one complex symbol may be mapped to each RE.

FIG. 6 illustrates examples of a resource grid per antenna port and numerology to which a method proposed in the disclosure is applicable.

Each element of the resource grid for the numerology $\mu$ and the antenna port p is called a resource element and is uniquely identified by an index pair $(k,\bar{l})$, where $k = 0,...,N_{\mathrm{RB}}^{\mu}N_{\mathrm{sc}}^{\mathrm{RB}} - 1$ is an index on a frequency domain, and $\bar{l} = 0,...,2^{\mu}N_{\mathrm{symb}}^{(\mu)} - 1$ refers to a location of a symbol in a subframe. The index pair $(k,l)$ is used to refer to a resource element in a slot, where $l = 0,...,N_{\mathrm{symb}}^{\mu} - 1$.

The resource element $(k,\bar{l})$ for the numerology $\mu$ and the antenna port p corresponds to a complex value $a_{k,\bar{l}}^{(p,\mu)}$. When there is no risk for confusion or when a specific antenna port or numerology is not specified, the indices p and $\mu$ may be dropped, and as a result, the complex value may be $a_{k,\bar{l}}^{(p)}$ or $a_{k,\bar{l}}$.

Further, a physical resource block is defined as $N_{\mathrm{sc}}^{\mathrm{RB}} = 12$ consecutive subcarriers in the frequency domain.

Point A serves as a common reference point of a resource block grid and may be obtained as follows.

- offsetToPointA for PCell downlink represents a frequency offset between the point A and a lowest subcarrier of a lowest resource block that overlaps a SS/PBCH block used by the UE for initial cell selection, and is expressed in units of resource blocks assuming 15 kHz subcarrier spacing for FR1 and 60 kHz subcarrier spacing for FR2;
- absoluteFrequencyPointA represents frequency-location of the point A expressed as in absolute radio-frequency channel number (ARFCN);

The common resource blocks are numbered from 0 and upwards in the frequency domain for subcarrier spacing configuration $\mu$.

The center of subcarrier 0 of common resource block 0 for the subcarrier spacing configuration $\mu$ coincides with "point A". A common resource block number $n_{\mathrm{CRB}}^{\mu}$ in the frequency domain and resource elements (k, l) for the subcarrier spacing configuration $\mu$ may be given by the following Equation 1.

$$[\text{Equation 1}]$$

$$n_{\mathrm{CRB}}^{\mu} = \left\lfloor \frac{k}{N_{\mathrm{sc}}^{\mathrm{RB}}} \right\rfloor$$

Here, $k$ may be defined relative to the point A so that $k = 0$ corresponds to a subcarrier centered around the point A. Physical resource blocks are defined within a bandwidth part (BWP) and are numbered from 0 to $N_{\mathrm{BWP},i}^{\mathrm{size}} - 1$, where $i$ is No. Of the BWP. A relation between the physical resource block $n_{\mathrm{PRB}}$ in BWP $i$ and the common resource block $n_{\mathrm{CRB}}$ may be given by the following Equation 2.

$$[\text{Equation 2}]$$

$$n_{\mathrm{CRB}} = n_{\mathrm{PRB}} + N_{\mathrm{BWP},i}^{\mathrm{start}}$$

Here, $N_{\mathrm{BWP},i}^{\mathrm{start}}$ may be the common resource block where the BWP starts relative to the common resource block 0.

**Physical Channel and General Signal Transmission**

FIG. 7 illustrates physical channels and general signal transmission. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S701). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S702).

Meanwhile, when there is no radio resource first accessing the eNB or for signal transmission, the UE may perform a Random Access Procedure (RACH) to the eNB (S703 to S706). To this end, the UE may transmit a specific sequence to a preamble through a Physical Random Access Channel (PRACH) (S703 and S705) and receive a response message (Random Access Response (RAR) message) for the preamble through the PDCCH and a corresponding PDSCH. In the case of a contention based RACH, a Contention Resolution Procedure may be additionally performed (S706).

The UE that performs the above procedure may then perform PDCCH/PDSCH reception (S707) and Physical Uplink Shared Channel (PUSCH)/Physical Uplink Control Channel (PUCCH) transmission (S708) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

Meanwhile, the control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

In the present disclosure, the content of the CSI related operation may mean all/part of the content of the CSI reference signal to be described below.

## Channel State Information (CSI)-related Procedure

In the new radio (NR) system, a channel state information-reference signal (CSI-RS) is used for time/frequency tracking, CSI computation, layer 1(L1)-reference signal received power (RSRP) computation, or mobility. The CSI computation is related to CSI acquisition, and L1-RSRP computation is related to beam management (BM).

Hereinafter, operation of a UE with respect to the CSI-related procedure will be described.

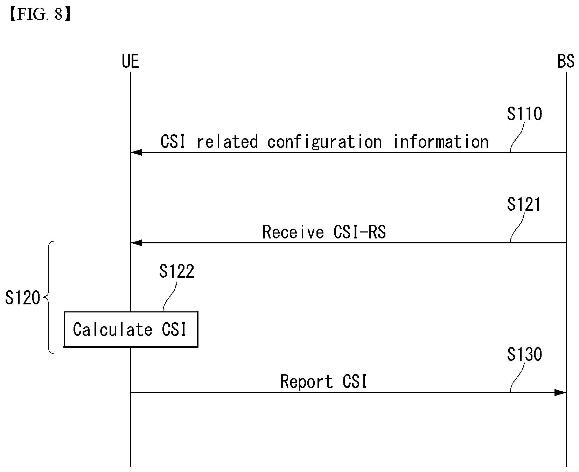

FIG. 8 is a flowchart illustrating an example of a CSI-related procedure.

Referring to Fig. 8, to perform one of the above purposes of a CSI-RS, a terminal (e.g., a UE) receives CSI related configuration information from a base station (e.g., a general node B (gNB)) through a radio resource control (RRC) signaling(S 110).

The CSI-related configuration information may include at least one of CSI interference management (IM) resource-related information, CSI measurement configuration-related information, CSI resource configuration-related information, CSI-RS resource-related information, or CSI reporting configuration-related information.

The CSI-IM resource-related information may include CSI-IM resource information, CSI-IM resource set information, etc. The CSI-IM resource set is identified by a CSI-IM resource set ID (identifier), and one resource set includes at least one CSI-IM resource. Each CSI-IM resource is identified by a CSI-IM resource ID.

The CSI resource configuration-related information defines a group including at least one of a non-zero power (NZP) CSI-RS resource set, a CSI-IM resource set, or a CSI-SSB resource set. That is, the CSI resource configuration-related information includes a CSI-RS resource set list, and the CSI-RS resource set list may include at least one of a NZP CSI-RS resource set list, a CSI-IM resource set list, or a CSI-SSB resource set list. The CSI resource configuration-related information may be expressed as CSI-REsourceConfig IE. The CSI-RS resource set is identified by a CSI-RS resource set ID, and one resource set includes at least one CSI-RS resource. Each CSI-RS resource is identified by a CSI-RS resource ID.

Table 6 shows an example of NZP CSI-RS resource set IE. As shown in Table 6, parameters (e.g.: the BM-related parameter repetition, and the tracking-related parameter trs-Info indicative of (or indicating) a purpose of a CSI-RS may be set for each NZP CSI-RS resource set.

【Table 5】

```
-- ASN1START
-- TAG-NZP-CSI-RS-RESOURCESET-START
NZP-CSI-RS-ResourceSet ::=          SEQUENCE {
    nzp-CSI-ResourceSetId           NZP-CSI-RS-ResourceSetId,
    nzp-CSI-RS-Resources            SEQUENCE (SIZE (1..maxNrofNZP-CSI-RS-
ResourcesPerSet)) OF NZP-CSI-RS-ResourceId,
    repetition                      ENUMERATED { on, off }
    aperiodicTriggeringOffset       INTEGER(0..4)
    trs-Info                        ENUMERATED {true}

    ...
}


-- TAG-NZP-CSI-RS-RESOURCESET-STOP
-- ASN1STOP
```

In addition, the parameter repetition corresponding to a higher layer parameter corresponds to "CSI-RS-ResourceRep" of L1 parameter.

The CSI reporting configuration related information includes the parameter reportConfigType indicative of a time domain behavior and the parameter reportQuantity indicative of a CSI-related quantity to be reported.

The time domain behavior may be periodic, aperiodic, or semi-persistent.

The CSI reporting configuration-related information may be represented as CSI-ReportConfig IE, and Table 7 shows an example of the CSI-ReportConfig IE.

【Table 6】

```
-- ASN1START
-- TAG-CSI-RESOURCECONFIG-START

CSI-ReportConfig ::=              SEQUENCE {
    reportConfigId                   CSI-ReportConfigId,
    carrier                          ServCellIndex
OPTIONAL,    -- Need S
    resourcesForChannelMeasurement   CSI-ResourceConfigId,
    csi-IM-ResourcesForInterference  CSI-ResourceConfigId    OPTIONAL,
    -- Need R
    nzp-CSI-RS-ResourcesForInterference  CSI-ResourceConfigId    OPTIONAL,
    -- Need R
    reportConfigType                 CHOICE {
        periodic                         SEQUENCE {
            reportSlotConfig                 CSI-ReportPeriodicityAndOffset,
            pucch-CSI-ResourceList               SEQUENCE (SIZE
(1..maxNrofBWPs)) OF PUCCH-CSI-Resource
        },
        semiPersistentOnPUCCH            SEQUENCE {
            reportSlotConfig                 CSI-ReportPeriodicityAndOffset,
            pucch-CSI-ResourceList               SEQUENCE (SIZE
(1..maxNrofBWPs)) OF PUCCH-CSI-Resource
        },
        semiPersistentOnPUSCH            SEQUENCE {
            reportSlotConfig                 ENUMERATED {sl5, sl10, sl20,
sl40, sl80, sl160, sl320},
            reportSlotOffsetList             SEQUENCE (SIZE (1.. maxNrofUL-
```

```
Allocations)) OF INTEGER(0..32),
            p0alpha                         P0-PUSCH-AlphaSetId
        },
        aperiodic                       SEQUENCE {
            reportSlotOffsetList            SEQUENCE (SIZE (1..maxNrofUL-
Allocations)) OF INTEGER(0..32)
        }
    },
    reportQuantity              CHOICE {
        none                        NULL,
        cri-RI-PMI-CQI              NULL,
        cri-RI-i1                  NULL,
        cri-RI-i1-CQI              SEQUENCE {
            pdsch-BundleSizeForCSI          ENUMERATED {n2, n4}
    OPTIONAL
        },
        cri-RI-CQI                 NULL,
        cri-RSRP                   NULL,
        ssb-Index-RSRP              NULL,
        cri-RI-LI-PMI-CQI          NULL
    },
    },
```

- In addition, the UE measures CSI based on configuration information related to the CSI (S120).

Measuring the CSI may include (1) receiving a CSI-RS by the UE (S121) and (2) computing CSI based on the received CSI-RS (S122), a detailed description thereof will be scribed later.
resource element (RE) mapping of CSI-RS resources of the CSI-RS is performed in time and frequency domains by higher layer parameter CSI-RS-ResourceMapping.

Table 8 shows an example of CSI-RS-ResourceMapping IE.

【Table 8】

```
-- ASN1START

-- TAG-CSI-RS-RESOURCEMAPPING-START


CSI-RS-ResourceMapping ::=              SEQUENCE {
```

```
    frequencyDomainAllocation          CHOICE {
        row1                           BIT STRING (SIZE (4)),
        row2                           BIT STRING (SIZE (12)),
        row4                           BIT STRING (SIZE (3)),
        other                          BIT STRING (SIZE (6))
    },
    nrofPorts                          ENUMERATED {p1,p2,p4,p8,p12,p16,p24,p32},
    firstOFDMSymbolInTimeDomain            INTEGER (0..13),
    firstOFDMSymbolInTimeDomain2    INTEGER (2..12)
    cdm-Type                           ENUMERATED {noCDM, fd-CDM2, cdm4-FD2-
TD2, cdm8-FD2-TD4},
    density                            CHOICE {
        dot5                           ENUMERATED {evenPRBs, oddPRBs},
        one                                NULL,
        three                          NULL,
        spare                          NULL
    },
    freqBand                           CSI-FrequencyOccupation,
    ...

}
```

In Table 8, a density (D) indicates a density of CSI-RS resources measured in a RE/port/physical resource block (PRB), and nrofPorts indicates the number of antenna ports.

The UE reports the measured CSI to the base station (S130).

Herein, when a quantity of CSI-ReportConfig in Table 7 is set to "none (or No report)", the UE may skip the reporting.

However, even when the quantity is set to "none (or No report)", the UE may report the measured CSI to the base station.

The case where the quantity is set to "none" is t when an aperiodic TRS is triggered or when repetition is set.

Herein, it may be defined such that reporting by the UE is omitted only when repetition is set to "ON".

## CSI Measurement

The NR system supports more flexible and dynamic CSI measurement and reporting. The CSI measurement may include receiving a CSI-RS, and acquiring CSI by computing the received CSI-RS.

As time domain behaviors of CSI measurement and reporting, aperiodic/semi-persistent/periodic channel measurement (CM) and interference measurement (IM) are supported. To configure CSI-IM, four port NZP CSI-RS RE patterns are used.

CSI-IM-based IMR of NR has a design similar to CSI-IM of LTE and is configured independent of ZP CSI-RS resources for PDSCH rate matching. In addition, each port in the NZP CSI-RS-based IMR emulates an interference layer having (a desirable channel and) a pre-coded NZP CSI-RS. This is about intra-cell interference measurement of a multi-user case, and it primarily targets MU interference.

At each port of the configured NZP CSI-RS-based IMR, the base station transmits the pre-coded NZP CSI-RS to the UE.

The UE assumes a channel/interference layer for each port in a resource set, and measures interference.

If there is no PMI or RI feedback for a channel, a plurality of resources are configured in a set and the base station or network indicates, through DCI, a subset of NZP CSI-RS resources for channel/interference measurement.

Resource setting and resource setting configuration will be described in more detail.

## Resource Setting

Each CSI resource setting "CSI-ResourceConfig" includes configuration of S≤1 CSI resource set (which is given by higher layer parameter "csi-RS-ResourceSetList"). Herein, a CSI resource setting corresponds to CSI-RS-resourcesetlist. Herein, S represents the number of configured CSI-RS resource sets. Herein, configuration of S≤1 CSI resource set includes each CSI resource set including CSI-RS resources (composed of NZP CSI-RS or CSI-IM), and a SS/PBCH block (SSB) resource used for L1-RSRP computation.

Each CSI resource setting is positioned at a DL bandwidth part (BWP) identified by higher layer parameter bwp-id. In addition, all CSI resource settings linked to a CSI reporting setting have the same DL BWP.

In a CSI resource setting included in CSI-ResourceConfig IE, a time domain behavior of a CSI-RS resource may be indicated by higher layer parameter resourceType and may be configured to be aperiodic, periodic, or semi-persistent. The number S of CSI-RS resource sets configured for periodic and semi-persistent CSI resource settings is restricted to "1". A periodicity and a slot offset configured for periodic and semi-persistent CSI resource settings are given from a numerology of related DL BWP, just like being given by bwp-id.

When the UE is configured with a plurality of CSI-ResourceConfig including the same NZP CSI-RS resource ID, the same time domain behavior is configured for the CSI-ResourceConfig.

When the UE is configured with a plurality of CSI-ResourceConfig having the same CSI-IM resource ID, the same time domain behavior is configured for the CSI-ResourceConfig.

Then, one or more CSI resource settings for channel measurement (CM) and interference measurement (IM) are configured through higher layer signaling.

A CSI-IM resource for interference measurement.

- An NZP CSI-RS resource for interference measurement.
- An NZP CSI-RS resource for channel measurement.

That is, a channel measurement resource (CMR) may be an NZP CSI-RS for CSI acquisition, and an interference measurement resource (IMR) may be an NZP CSI-RS for CSI-IM and for IM.

Herein, CSI-IM (or a ZP CSI-RS for IM) is primarily used for inter-cell interference measurement.

In addition, an NZP CSI-RS for IM is primarily used for intra-cell interference measurement from multi-user.

The UE may assume that a CSI-RS resource(s) and a CSI-IM/NZP CSI-RS resource(s) for interference measurement configured for one CSI reporting is "QCL-TypeD" for each resource.

## Resource Setting Configuration

As described above, a resource setting may represent a resource set list.

Regarding aperiodic CSI, each trigger state configured using higher layer parameter "CSI-AperiodicTrigger-State" is that each CSI-ReportConfig is associated with one or multiple CSI-ReportConfig linked to a periodic, semi-persistent, or aperiodic resource setting.

One reporting setting may be connected to three resource settings at maximum.

When one resource setting is configured, a resource setting (given by higher layer parameter resourcesForChannelMeasurement) is about channel measurement for L1-RSRP computation.

- When two resource settings are configured, the first resource setting (given by higher layer parameter resourcesForChannelMeasurement) is for channel measurement and the second resource setting (given by csi-IM-ResourcesForInterference or nzp-CSI-RS - ResourcesForInterference) is for CSI-IM or for interference measurement performed on an NZP CSI-RS.
- When three resource settings are configured, the first resource setting (given by resourcesForChannelMeasurement) is for channel measurement, the second resource setting (given by csi-IM-ResourcesForInterference) is for CSI-IM based interference measurement, and the third resource setting (given by nzp-CSI-RS-ResourcesForInterference) is for NZP CSI-RS based interference measurement.

Regarding semi-persistent or periodic CSI, each CSI-ReportConfig is linked to a periodic or semi-persistent resource setting.

- When one resource setting (given by resourcesForChannelMeasurement) is configured, the resource setting is about channel measurement for L1-RSRP computation.

- When two resource settings are configured, the first resource setting (given by resourcesForChannelMeasurement) is for channel measurement, and the second resource setting (given by the higher layer parameter "csi-IM-ResourcesForInterference") is used for interference measurement performed on CSI-IM.

## CSI Computation

If interference measurement is performed on CSI-IM, each CSI-RS resource for channel measurement is associated with the CSI-IM resource by resource by the order of CSI-RS resources and CSI-IM resources in a corresponding resource set.. The number of CSI-RS resources for channel measurement is equal to the number of CSI-IM resources.

When interference measurement is performed in NZP CSI-RS, the UE does not expect that more than 1 NZP CSI-RS resource is configured in the resource set associated with the resource setting for channel measurement.

A UE configured with the higher layer parameter 'nzp-CSI-RS-ResourcesForInterference' may expect 18 or less NZP CSI-RS ports in the NZP CSI-RS resource set.

For CSI measurement, the UE assumes the following.

- Each NZP CSI-RS port configured for interference measurement corresponds to an interference transport layer.
- All interference transport layers of the NZP CSI-RS port for interference measurement consider the EPRE (energy per resource element) ratio.
- NZP CSI-RS resource for channel measurement, NZP CSI-RS resource for interference measurement or other interference signals on RE(s) of CSI-IM resource for interference measurement.

## CSI Reporting

For CSI reporting, time and frequency resources available for an UE are controlled by a base station.

CSI may include at least one of channel quality indicator (CQI), a precoding matrix indicator (PMI), a CSI-RS resource indicator (CRI), am SS/PBCH block resource indicator (SSBRI), a layer indicator (LI), a rank indicator (RI), or L1-RSRP.

Regarding the CQI, the PMI, the CRI, the SSBRI, the LI, the RI, and the L1-RSRP, the UE may be configured with $N \leq 1$ CSI-ReportConfig reporting setting, $M \leq 1$ CSI-ResourceConfig resource setting, and a list of one or two trigger states (provided by aperiodicTriggerStateList and semiPersistentOnPUSCH-TriggerStateList) by a higher layer. In the aperiodicTriggerStateList, each trigger state includes a channel and a list of associated CSI-ReportConfigs selectively indicative of Resource set IDs for interference. In the semiPersistentOnPUSCH-TriggerStateList, each trigger state includes one associated CSI-ReportConfig.

In addition, a time domain behavior of CSI reporting supports periodic, semi-persistent, and aperiodic CSI reporting.

i) The periodic CSI presorting is performed on a short PUCCH and a long PUCCH. A periodicity and a slot offset of the periodic CSI reporting may be configured by RRC and refer to CSI-ReportConfig IE.

ii) SP CSI reporting is performed on a short PUCCH, a long PUCCH, or a PUSCH.

In the case of SP CSI on a short/long PUCCH, a periodicity and a slot offset are configured by RRC, and CSI reporting to an additional MAC CE is activated/deactivated

In the case of SP CSI on a PUSCH, a periodicity of SP CSI reporting is configured by RRC, but a slot offset thereof is not configured by RRC and SP CSI reporting is activated/deactivated by DCI (format 0_1).

The first CSI reporting timing follows a PUSCH time domain allocation value indicated by DCI, and subsequent CSI reporting timing follows a periodicity which is configured by RRC. For SP CSI reporting on a PUSCH, a separated RNTI (SP-CSI C-RNTI) is used.

DCI format 0_1 may include a CSI request field and activate/deactivate a specific configured SP-CSI trigger state. In addition, SP CSI reporting is activated/deactivated identically or similarly to a mechanism having data transmission on a SPS PUSCH.

iii) Aperiodic CSI reporting is performed on a PUSCH and triggered by DCI. In this case, information related to the trigger of the aperiodic CSI reporting may be transmitted/indicated/configured via MAC-CE.

In the case of AP CSI having an AP CSI-RS, an AP CSI-RS timing is configured by RRC. Herein, a timing of AP CSI reporting is dynamically controlled by DCI.

A reporting method (e.g., transmitting in order of RI, WB, PMI/CQI, and SB PMI/CQI) by which CSI is divided and reported in a plurality of reporting instances, the method which is applied for PUCCH-based CSI reporting in LTE, is not applied in NR. Instead, NR restricts configuring specific CSI reporting on a short/long PUCCH, and a CSI omission rule is defined. Regarding an AP CSI reporting timing, PUSCH symbol/slot location is dynamically indicated by DCI. In addition, candidate slot offsets are configured by RRC. Regarding CSI reporting, a slot offset(Y) is configured for each reporting setting. Regarding UL-SCH, a slot offset K2 is configured separately.

Two CSI latency classes (low latency class and high latency class) are defined in terms of CSI computation complexity. The low latency CSI is WB CSI that includes up to 4-ports Type-I codebook or up to 4-ports non-PMI feedback CSI. The high latency CSI is a CSI other than the low latency CSI. Regarding a normal UE, (Z, Z') is defined in a unit of OFDM symbols. Z represents the minimum CSI processing time after receiving CSI triggering DCI and before performing CSI reporting. Z' represents the minimum CSI processing time after receiving CSI-RS about a channel/interference and before performing CSI reporting.

Additionally, the UE reports the number of CSI which can be calculated at the same time.

### Reporting Configurations

The UE may have to calculate CSI parameters (if reported) assuming the following dependencies between the CSI parameters (if reported).

- LI shall be calculated on condition of the reported CQI, PMI, RI and CRI.
- CQI shall be calculated on condition of the reported PMI, RI and CRI.
- PMI shall be calculated on condition of the reported RI and CRI.
- RI shall be calculated on condition of the reported CRI.

The reporting configuration for CSI can be aperiodic (using PUSCH), periodic (using PUCCH) or semi-persistent (using PUCCH and DCI activated PUSCH). The CSI-RS resources may be periodic, semi-persistent, or aperiodic. Table 8 shows the supported combinations of CSI reporting configurations and CSI-RS resource configurations and how the CSI reporting is triggered for each CSI-RS resource configuration. Periodic CSI-RS may be configured by higher layers. Semi-persistent CSI-RS may be activated and deactivated as described in the pre-defined standard (e.g., 3GPP TS 38.214, Section 5.2.1.5.2). Aperiodic CSI-RS may be configured and triggered/activated as described in the pre-defined standard (e.g., 3GPP TS 38.214, Section 5.2.1.5.1).

【Table 8】

| CSI-RS Configuration | Periodic CSI Reporting | Semi-Persistent CSI Reporting | Aperiodic CSI Reporting |
|---|---|---|---|
| Periodic CSI-RS | No dynamic triggering/ activation | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Semi-Persistent CSI-RS | Not Supported | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Aperiodic CSI-RS | Not Supported | Not Supported | Triggered by DCI; additionally, activation command [10, TS 38.321] possible as defined in Subclause 5.2.1.5.1. |

**Activation/Deactivation of Semi-persistent CSI-RS/CSI-IM resource set**

The network (or base station) may activate and deactivate the configured semi-persistent CSI-RS/CSI-IM resource sets of a serving cell by sending the SP CSI-RS/CSI-IM resource set activation/deactivation MAC CE described in the pre-defined standard (e.g., 3GPP TS38.321, section 6.1.3.12). The configured semi-persistent CSI-RS/CSI-IM resource sets may be initially deactivated upon configuration and after a handover.

The MAC entity may have to perform the following.

1> If the MAC entity receives an SP CSI-RS/CSI-IM resource set activation/deactivation MAC CE on a serving cell:

2> the MAC entity may have to indicate to lower layers information about the SP CSI-RS/CSI-IM resource set activation/deactivation MAC CE.

**Aperiodic CSI Trigger State subselection**

The network (or base station) may select among the configured aperiodic CSI trigger states of a serving cell by sending the aperiodic CSI trigger state subselection MAC CE described in the pre-defined standard (e.g., 3GPP TS38.321 section 6.1.3.13).

The MAC entity may have to perform the following.

1> If the MAC entity receives an aperiodic CSI trigger state subselection MAC CE on a serving cell:

2> the MAC entity may have to indicate to lower layers information about aperiodic CSI trigger state subselection MAC CE.

**CSI Reference Signal**

General

Zero-power (ZP) CSI-RS and non-zero-power (NZP) CSI-RS are defined as follows:

- for a non-zero-power CSI-RS configured by the NZP-CSI-RS-Resource IE or by the CSI-RS-Resource-Mobility field in the CSI-RS-ResourceConfigMobility IE, the sequence may have to be generated and mapped by a sequence generation method to be described below.
- for a zero-power CSI-RS configured by the ZP-CSI-RS-Resource IE, the UE assumes that the resource elements are not used for PDSCH transmission. The UE may have to perform the same measurement/reception on channels/signals except PDSCH regardless of whether they collide with ZP CSI-RS or not.

Sequence Generation)

The UE may have to assume the reference-signal sequence $r(m)$ is defined by Equation 3.

【Equation 3】

$$r(m) = \frac{1}{\sqrt{2}}\left(1 - 2 \cdot c(2m)\right) + j\frac{1}{\sqrt{2}}\left(1 - 2 \cdot c(2m+1)\right)$$

Here, the pseudo-random sequence $c(i)$ may be defined in the pre-defined standard. The pseudo-random sequence generator may have to be initialized by Equation 4 at the start of each OFDM symbol.

【Equation 4】

$$c_{\text{init}} = \left(2^{10}\left(N_{\text{symb}}^{\text{slot}} n_{\text{s,f}}^{\mu} + l + 1\right)(2n_{\text{ID}} + 1) + n_{\text{ID}}\right)\mod 2^{31}$$

Here, $n_{\text{s,f}}^{\mu}$ is the slot number within a radio frame, $l$ is the OFDM symbol number within a slot, and $n_{\text{ID}}$ equals the higher-layer parameter scramblingID or sequenceGenerationConfig.

Mapping to Physical Resources

For each CSI-RS configured, the UE may have to assume the sequence $r(m)$ being mapped to resources elements $(k, l)_{p,\mu}$ according to Equation 5.

【Equation 5】

$$a_{k,l}^{(p,\mu)} = \beta_{\text{CSIRS}} w_{\text{f}}\left(k'\right) \cdot w_{\text{t}}\left(l'\right) \cdot r_{l,n_{\text{s,f}}}\left(m'\right)$$

$$m' = \lfloor n\alpha \rfloor + k' + \left\lfloor \frac{\bar{k}\rho}{N_{\text{sc}}^{\text{RB}}} \right\rfloor$$

$$k = nN_{\text{sc}}^{\text{RB}} + \bar{k} + k'$$

$$l = \bar{l} + l'$$

$$\alpha = \begin{cases} \rho & \text{for } X = 1 \\ 2\rho & \text{for } X > 1 \end{cases}$$

$$n = 0,1,\ldots$$

If the resource element $(k, l)_{p,\mu}$ is within the resource blocks occupied by the CSI-RS resource for which the UE is configured, the reference point for $k = 0$ is subcarrier 0 in common resource block 0.
The value of $\rho$ may be given by the higher-layer parameter density in the CSI-RS-ResourceMapping IE or the CSI-RS-CellMobility IE. And, the number of ports X may be given by the higher-layer parameter nrofPorts.

The UE may not be expected to receive CSI-RS and DM-RS on the same resource elements.

The UE may have to assume $\beta_{\text{CSIRS}} > 0$ for a non-zero-power CSI-RS. Here, if $\beta_{\text{CSIRS}}$ is provided, $\beta_{\text{CSIRS}}$ may be selected such that the power offset specified by the higher-layer parameter powerControlOffsetSS in the NZP-CSI-RS-Resource IE is fulfilled.

The quantities $k'$, $l'$, wf(k'), and $w_t(l')$ may be given by Tables 9 to 13. Each $(\overline{k},\overline{l})$ in a given row of Table 9 may correspond to a CDM group of size 1 (no CDM) or size 2, 4, or 8. The CDM type may be provided by the higher layer parameter *cdm-Type* in the *CSI-RS-ResourceMapping* IE. The indices $k'$ and $l'$ may index resource elements within a CDM group. The time-domain locations $l_0 \in \{0,1, \dots , 13\}$ and $l_1 \in \{2, 3, \dots , 12\}$ may be provided by the higher-layer parameters firstOFDMSymbolInTimeDomain and firstOFDMSymbolInTimeDomain2, respectively, in the CSI-RS-ResourceMapping IE or the CSI-RS-ResourceConfigMobility IE and may be defined relative to the start of a slot.

The frequency-domain location may be given by a bitmap provided by the higher-layer parameter frequencyDomainAllocation in the CSI-RS-ResourceMapping IE or the CSI-RS-ResourceConfigMobility IE with the bitmap and value of $k_i$ in Table 9 given by:

- $[b_3 \cdots b_0]$, $k_{i-1} = f(i)$ for row 1 of Table 9
- $[b_{11} \cdots b_0]$, $k_{i-1} = f(i)$ for row 2 of Table 9
- $[b_2 \cdots b_0]$, $k_{i-1} = 4f(i)$ for row 4 of Table 9
- $[b_5 \cdots b_0]$, $k_{i-1} = 2f(i)$ for all other cases

Here, $f(i)$ may be the bit number of the $i^{\text{th}}$ bit in the bitmap set to one, repeated across every $\lceil 1/\rho \rceil$ of the resource blocks configured for CSI-RS reception by the UE. The starting position and number of the resource blocks in which the UE shall assume that CSI-RS is transmitted may be given by the higher-layer parameters freqBand and density in the CSI-ResourceConfig IE or given by the higher-layer parameters in the CSI-RS-CellMobility IE. Here, the startPRB given by csi-rs-MeasurementBW may be based on common resource block 0.

The UE may have to assume that a CSI-RS is transmitted using antenna ports $p$ numbered according to Equation 6.

【Equation 6】

$$p = 3000 + s + jL;$$
$$j = 0,1,\dots,N/L - 1$$
$$s = 0,1,\dots,L - 1;$$

Here, $S$ is the sequence index provided by Table, $L \in \{1,2,4,8\}$ is the CDM group size, and $N$ is the number of CSI-RS ports. The CDM group index $j$ given in Tables 10 to 13 may correspond to the time/frequency locations $(\overline{k},\overline{l})$ for a given row of the table. The CDM groups may be numbered in order of increasing frequency domain allocation first and then increasing time domain allocation. For a CSI-RS resource configured as periodic or semi-persistent by the higher-layer parameter resourceType or configured by the higher-layer parameter CSI-RS-CellMobility, the UE may have to assume that the CSI-RS is transmitted in slots satisfying Equation 7.

【Equation 7】

$$\left( N_{\text{slot}}^{\text{frame},\mu} n_{\text{f}} + n_{\text{s,f}}^{\mu} - T_{\text{offset}} \right) \bmod T_{\text{CSI-RS}} = 0$$

Here, the periodicity $T_{\text{CSI-RS}}$ (in slots) and slot offset $T_{\text{offset}}$ may be obtained from the higher-layer parameter CSI-ResourcePeriodicityAndOffset or slotConfig. The UE may have to assume that CSI-RS is transmitted in a candidate slot as described in the pre-defined standard (e.g., clause 11.1 of 3GPP TS 38.213). The UE may assume that antenna ports within a CSI-RS resource are quasi co-located (QCL) with QCL Type A, Type D (when applicable), and average gain.

Table 9 shows CSI-RS locations within a slot.

[Table 9]

| Row | Ports $X$ | Density $\rho$ | cdm-Type | $(\overline{k,l})$ | CDM group index $j$ | $k'$ | $l'$ |
|---|---|---|---|---|---|---|---|
| 1 | 1 | 3 | noCDM | $(k_0, l_0)$, $(k_0 + 4, l_0)$, $(k_0 + 8, l_0)$ | 0,0,0 | 0 | 0 |
| 2 | 1 | 1, 0.5 | noCDM | $(k_0, l_0)$, | 0 | 0 | 0 |
| 3 | 2 | 1, 0.5 | fd-CDM2 | $(k_0, l_0)$, | 0 | 0, 1 | 0 |
| 4 | 4 | 1 | fd-CDM2 | $(k_0, l_0)$, $(k_0 + 2, l_0)$ | 0,1 | 0, 1 | 0 |
| 5 | 4 | 1 | fd-CDM2 | $(k_0, l_0)$, $(k_0, l_0 + 1)$ | 0,1 | 0, 1 | 0 |
| 6 | 8 | 1 | fd-CDM2 | $(k_0, l_0)$, $(k_1, l_0)$, $(k_2, l_0)$, $(k_3, l_0)$ | 0,1,2,3 | 0, 1 | 0 |
| 7 | 8 | 1 | fd-CDM2 | $(k_0, l_0)$, $(k_1, l_0)$, $(k_0, l_0 + 1)$, $(k_1, l_0 + 1)$ | 0,1,2,3 | 0, 1 | 0 |
| 8 | 8 | 1 | cdm4-FD2-TD2 | $(k_0, l_0)$, $(k_1, l_0)$ | 0,1 | 0, 1 | 0, 1 |
| 9 | 12 | 1 | fd-CDM2 | $(k_0, l_0)$, $(k_1, l_0)$, $(k_2, l_0)$, $(k_3, l_0)$, $(k_4, l_0)$, $(k_5, l_0)$ | 0,1,2,3,4,5 | 0, 1 | 0 |
| 10 | 12 | 1 | cdm4-FD2-TD2 | $(k_0, l_0)$, $(k_1, l_0)$, $(k_2, l_0)$ | 0,1,2 | 0, 1 | 0, 1 |
| 11 | 16 | 1, 0.5 | fd-CDM2 | $(k_0, l_0)$, $(k_1, l_0)$, $(k_2, l_0)$, $(k_3, l_0)$, $(k_0, l_0 + 1)$, $(k_1, l_0 + 1)$, $(k_2, l_0 + 1)$, $(k_3, l_0 + 1)$ | 0,1,2,3, 4,5,6,7 | 0, 1 | 0 |
| 12 | 16 | 1, 0.5 | cdm4-FD2-TD2 | $(k_0, l_0)$, $(k_1, l_0)$, $(k_2, l_0)$, $(k_3, l_0)$ | 0,1,2,3 | 0, 1 | 0, 1 |
| 13 | 24 | 1, 0.5 | fd-CDM2 | $(k_0, l_0)$, $(k_1, l_0)$, $(k_2, l_0)$, $(k_0, l_0 + 1)$, $(k_1, l_0 + 1)$, $(k_2, l_0 + 1)$, $(k_0, l_1)$, $(k_1, l_1)$, $(k_2, l_1)$, $(k_0, l_1 + 1)$, $(k_1, l_1 + 1)$, $(k_2, l_1 + 1)$ | 0,1,2,3,4,5,6 , 7,8,9,10,11 | 0, 1 | 0 |
| 14 | 24 | 1, 0.5 | cdm4-FD2-TD2 | $(k_0, l_0)$, $(k_1, l_0)$, $(k_2, l_0)$, $(k_0, l_1)$, $(k_1, l_1)$, $(k_2, l_1)$ | 0,1,2,3,4,5 | 0, 1 | 0, 1 |
| 15 | 24 | 1, 0.5 | cdm8-FD2-TD4 | $(k_0, l_0)$, $(k_1, l_0)$, $(k_2, l_0)$ | 0,1,2 | 0, 1 | 0, 1, 2, 3 |
| 16 | 32 | 1, 0.5 | fd-CDM2 | $(k_0, l_0)$, $(k_1, l_0)$, $(k_2, l_0)$, $(k_3, l_0)$, $(k_0, l_0 + 1)$, $(k_1, l_0 + 1)$, $(k_2, l_0 + 1)$, $(k_3, l_0 + 1)$, $(k_0, l_1)$, $(k_1, l_1)$, $(k_2, l_1)$, $(k_3, l_1)$, $(k_0, l_1 + 1)$, $(k_1, l_1 + 1)$, $(k_2, l_1 + 1)$, $(k_3, l_1 + 1)$ | 0,1,2,3, 4,5,6,7, 8,9,10,11, 12,13,14,15 | 0, 1 | 0 |
| 17 | 32 | 1, 0.5 | cdm4-FD2-TD2 | $(k_0, l_0)$, $(k_1, l_0)$, $(k_2, l_0)$, $(k_3, l_0)$, $(k_0, l_1)$, $(k_1, l_1)$, $(k_2, l_1)$, $(k_3, l_1)$ | 0,1,2,3,4,5,6 ,7 | 0, 1 | 0, 1 |
| 18 | 32 | 1, 0.5 | cdm8-FD2-TD4 | $(k_0, l_0)$, $(k_1, l_0)$, $(k_2, l_0)$, $(k_3, l_0)$ | 0,1,2,3 | 0, 1 | 0, 1, 2, 3 |

Table 10 shows the sequences $w_f(k')$ and $w_t(l')$ for cdm-Type equal to 'noCDM'.

[Table 10]

| Index | $w_f(0)$ | $w_t(0)$ |
|---|---|---|
| 0 | 1 | 1 |

Table 11 shows the sequences $w_f(k')$ and $w_t(l')$ for cdm-Type equal to 'fd-CDM2'.

[Table 11]

| Index | [$w_f(0)$ $w_f(1)$] | $w_t(0)$ |
|---|---|---|
| 0 | [+1 +1] | 1 |
| 1 | [+1 -1] | 1 |

Table 11 shows the sequences $w_f(k')$ and $w_t(l')$ for cdm-Type equal to 'cdm4-FD2-TD2'.

[Table 12]

| Index | [$w_f(0)$ $w_f(1)$] | [$w_t(0)$ $w_t(1)$] |
|---|---|---|
| 0 | [+1 +1] | [+1 +1] |
| 1 | [+1 -1] | [+1 +1] |
| 2 | [+1 +1] | [+1 -1] |
| 3 | [+1 -1] | [+1 -1] |

Table 13 shows the sequences $w_f(k')$ and $w_t(l')$ for cdm-Type equal to 'cdm8-FD2-TD4'.

[Table 13]

| Index | [$w_f(0)$ $w_f(1)$] | [$w_t(0)$ $w_t(1)$ $w_t(2)$ $w_t(3)$] |
|---|---|---|
| 0 | [+1 +1] | [+1 +1 +1 +1] |
| 1 | [+1 -1] | [+1 +1 +1 +1] |
| 2 | [+1 +1] | [+1 -1 +1 -1] |
| 3 | [+1 -1] | [+1 -1 +1 -1] |
| 4 | [+1 +1] | [+1 +1 -1 -1] |
| 5 | [+1 -1] | [+1 +1 -1 -1] |
| 6 | [+1 +1] | [+1 -1 -1 +1] |
| 7 | [+1 -1] | [+1 -1 -1 +1] |

If the UE can report channel state information (CSI) based on a wideband channel value, it may be considered that a frequency density of a channel state information-reference signal (CSI-RS) for CSI estimation is reduced beyond what is defined in the current standard (e.g., see the contents of CSI-RS described above). In the current standard, the lowest density is defined as 0.5. The present disclosure proposes a method of reducing an actual frequency density of the CSI-RS to less than or equal to 0.5 based on a CSI-RS pattern defined in the current standard.

More specifically, the present disclosure proposes a method of determining a (P)RB, in which a CSI-RS is actually transmitted, based on a CDM group configured in a single CSI-RS resource (hereinafter, first embodiment), a method of configuring/indicating a repeated transmission of a RS for the same CSI-RS port within a specific time unit based on a CDM group configured in a single CSI-RS resource (hereinafter, second embodiment), and a method of transmitting a QCL reference RS of a CSI-RS resource based on a CSI-RS resource reception point for CM for CSI acquisition/reporting (hereinafter, third embodiment).

Embodiments of the present disclosure to be described below are merely distinguished for convenience of explanation. Thus, it is obvious that a partial method and/or partial configuration of any embodiment can be substituted or combined with a method and/or configuration of another embodiment.

A slot, a subframe, a frame, etc. described in embodiments of the present disclosure may be detailed examples of predetermined time units used in a wireless communication system. That is, when applying methods described in the present disclosure, time unit can be replaced by other time units applied to other wireless communication systems.

In the present disclosure, L1 signaling may mean DCI based dynamic signaling between a base station and a UE, and L2 signaling may mean RRC/MAC CE based higher layer signaling between a base station and a UE.

The contents described above (3GPP system, frame structure, NR system, etc.) can be combined with methods proposed in the present disclosure to be described below, and/or supplemented to clarify technical features of the methods proposed in the present disclosure.

In the present disclosure, '()' can be interpreted as both when excluding content in () and when including content in parentheses.

In the present disclosure, '/' can be interpreted as when including all the contents separated by '/' (and) or when including only a part of the separated contents (or).

## First Embodiment

A first embodiment describes a method of determining a (P)RB, in which a CSI-RS is actually transmitted, based on a CDM group configured in a single CSI-RS resource. And/or, a proposed method of the first embodiment may refer to the contents of the CSI related operation described above.

Methods to be described below are merely distinguished for convenience of explanation. Thus, it is obvious that configuration of any method can be substituted or combined with configuration of another method.

For CSI-RS port(s) included in a single CSI-RS resource, a (P)RB in which a reference signal (RS) corresponding to each port can be (actually) transmitted may be determined based on a code division multiplexing (CDM) group corresponding to each port. For example, the CDM group may be defined/configured/indicated by CDM group index/time domain location/frequency domain location. Here, 'RB' denotes a resource block, and 'PRB' denotes a physical resource block. In the present disclosure, 'PRB' may be replaced by 'RB'.

And/or, in order to apply the proposed method, the number (e.g., N) of CDM groups capable of being transmitted in the same (P)RB may be configured/indicated to the UE by the base station (e.g., by L1/L2 signaling), and/or defined as a specific value based on a fixed rule.

And/or, information on 'the number of CDM groups' and/or information on one or more CDM group sets consisting of one or more CDM groups replacing 'the number of CDM groups' may be configured/indicated to the UE by the base station (e.g., by L1/L2 signaling), and/or defined based on a fixed rule. Examples of the 'CDM group set' may include {set1: CDM group index 0/1, set2: CDM group index 2/3}. And/or, if the 'CDM group set' is configured/indicated to the UE, '(specific) N CDM groups' to be described below may correspond to a '(specific) CDM group set'. And/or, information on the CDM group set may represent 'the number of CDM groups' or may be signaled to 'the number of CDM groups'. For example, the base station may transmit, to the UE, information on the CDM group set representing the number of CDM groups capable of being transmitted in the same (P)RB.

And/or, RS(s) corresponding to CSI-RS port(s) included in the specific N CDM groups may be alternately transmitted in units of specific (P)RB within all the (P)RBs corresponding to the CSI-RS resource. For example, the unit of specific (P)RB may be 1/2/...(P)RB. In other words, unit of (P)RB may be x (P)RBs, where x is an integer. Further, 'all the (P)RBs corresponding to the CSI-RS resource' may mean a resource domain determined based on information configured in the CSI-RS resource through CSI-RS-ResourceMapping.

And/or, the 'CSI-RS port(s) included in the specific N CDM groups' may be configured/indicated to the UE based on the L1/L2 signaling, and/or defined based on a fixed rule.

As an example configured/indicated based on the L1/L2 signaling, the CDM group set may be configured/indicated/defined as in an example of the 'CDM group set', and/or may be configured/indicated/defined so that each CDM group set corresponds sequentially from a specific (P)RB (e.g., lowest (P)RB). For example, for {set1: CDM group index 0/1, set2: CDM group index 2/3}, CDM group(s) of set1 may correspond to 1st/3rd/5th/7th/... th (P)RB, and CDM group(s) of set2 may correspond to 2nd/4th/6th/8th/... th (P)RB. That is, the CDM group(s) of set1 may correspond to 1st (P)RB, 3rd (P)RB, 5th (P)RB, and 7th (P)RB, etc., and the CDM group(s) of set2 may correspond to 2nd (P)RB, 4th (P)RB, 6th (P)RB, and 8th (P)RB, etc..

As an example of the fixed rule, N CDM groups from a CDM group with a lowest index may be configured/indicated/defined to correspond sequentially from a specific (P)RB (e.g., lowest (P)RB). For example, if N=4 and the total number of CDM groups is 8, No. 0/1/2/3 CDM group may correspond to 1st/3rd/5th/7th/... th (P)RB, and No. 4/5/6/7 CDM group may correspond to 2nd/4th/6th/8th/... th (P)RB. That is, No. 0/1/2/3 CDM group may correspond to the odd-numbered (P)RB, and No. 4/5/6/7 CDM group may correspond to the even-numbered (P)RB.

As another example of the fixed rule, the 'CDM group set' may be defined based on a time domain location and/or frequency domain location of the CDM group, and may be configured/indicated/defined so that each CDM group set corresponds sequentially from a (P)RB (e.g., lowest (P)RB). A single time domain location may be configured via firstOFDMSymbolInTimeDomain ($l_0$) /firstOFDMSymbolInTimeDomain2 ($l_1$), and a frequency domain location may be configured via frequencyDomainAllocation($k_0,k_1,k_2,k_3$). For example, firstOFDMSymbolInTimeDomain ($l_0$)/firstOFDMSymbolInTimeDomain2 ($l_1$)/ frequencyDomainAllocation($k_0,k_1,k_2,k_3$) may be configured via CSI-RS-ResourceMapping IE of Table 7. Using this, CDM groups having the same time domain location may be defined as the same CDM group set, and/or CDM groups having the same frequency domain location may be defined as the same CDM group set.

The above-described examples can be regarded as examples for supporting the proposed method, and the above examples are not intended to be limited to the only method. Therefore, it is possible to apply other embodiments for supporting the proposed methods.

And/or, the 'unit of specific (P)RB' may be configured/indicated to the UE based on the L1/L2 signaling, and/or defined based on a fixed rule. For the number 'N' of CDM groups capable of being transmitted in the same (P)RB and the total number 'M' of CDM groups configured in the CSI-RS resource, if K = M/N, it may be interpreted that RS(s) corresponding to the same CSI-RS port(s) are transmitted at intervals of K (P)RB within 'all the (P)RBs corresponding to the CSI-RS resource'. If the K value has a remainder value, operations such as floor/ceil/round may be applied. In such a case, it may be defined so that mod(M,N) CDM groups correspond to every first/last (P)RB of specific (P)RB(s) (e.g., K (P)RB).

And/or, the proposed method may be interpreted as an operation in which transmission of CSI-RS corresponding to a specific port is omitted for the specific (P)RB(s) within all the (P)RBs corresponding to the CSI-RS resource.

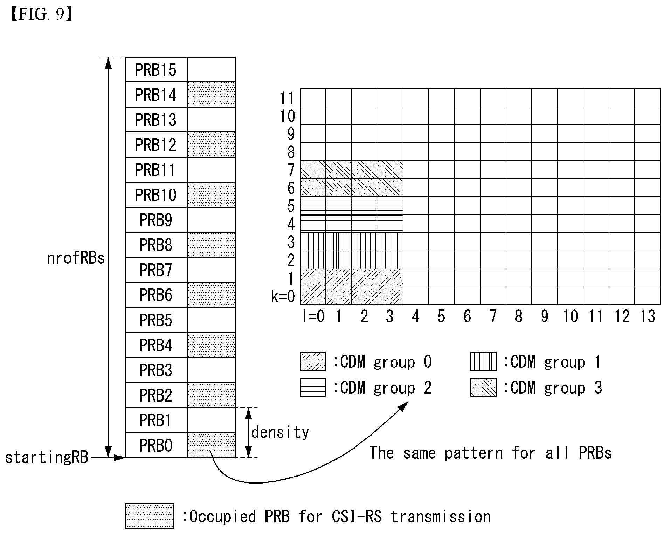

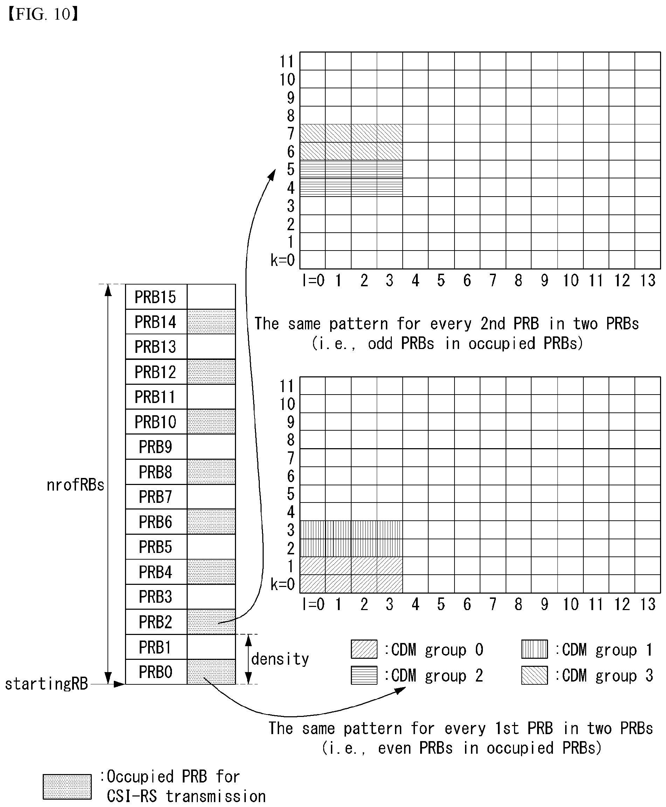

FIGS. 9 and 10 illustrate a difference between a CSI-RS transmitted based on the current standard and a CSI-RS transmitted based on a proposed method.

FIG. 9 illustrates an RS pattern within a single CSI-RS resource defined based on the current standard. That is, FIG. 9 illustrates an example where 32 ports, density of 0.5, and cdm8-FD2-TD4 are configured. For example, referring to FIG. 9, in all the PRBs (i.e., PRB0, PRB2, PRB4, PRB6, PRB8, PRB10, PRB12, and PRB14) corresponding to a single CSI-RS resource, RS corresponding to CDM group 0/1/2/3 may be transmitted.

FIG. 10 illustrates an RS pattern within a single CSI-RS resource defined based on the proposed method. That is, FIG. 10 illustrates an example where N=2, M=4, and K=2. An example of the proposed method may check changes in PRB in which the RS is actually transmitted based on a CDM group index within all the PRBs (i.e., occupied PRBs) corresponding to the CSI-RS resource. For example, referring to FIG. 10, for all the PRBs corresponding to the single CSI-RS resource, only the RS corresponding to CDM group 0/1 (e.g., CDM group set 0) may be transmitted in 1st/3rd/5th/7th PRB, and only the RS corresponding to CDM group 2/3 (e.g., CDM group set 1) may be transmitted in 2nd/4th/6th/8th PRB. That is, for all the PRBs (i.e., PRB0, PRB2, PRB4, PRB6, PRB8, PRB10, PRB12, and PRB14) corresponding to the single CSI-RS resource, only the RS corresponding to CDM group 0/1 (e.g., CDM group set 0) may be transmitted in PRB0, PRB4, PRB8, and PRB12, and only the RS corresponding to CDM group 2/3 (e.g., CDM group set 1) may be transmitted in PRB2, PRB6, PRB10, and PRB14. Based on the example of the proposed method, an actual frequency density for each CSI-RS port within the CSI-RS resource may be reduced to 0.25.

And/or, in order to configure/indicate specific (P)RB(s) in which an RS of a CSI-RS port corresponding to a specific CDM group will be actually transmitted within all the (P)RBs corresponding to the CSI-RS resource, the base station may configure/indicate related information to the UE based on L1/L2 signaling and/or a fixed rule. For example, after a bit-map for all the (P)RBs is constructed by corresponding it to 1-bit in unit of specific (P)RB (e.g., 1/2/...(P)RB) for all the (P)RBs corresponding to the CSI-RS resource, the actual transmission (P)RB may be configured/indicated in unit of specific resource (e.g., specific CDM group(s) and/or specific CDM group set(s)) using the bit-map.

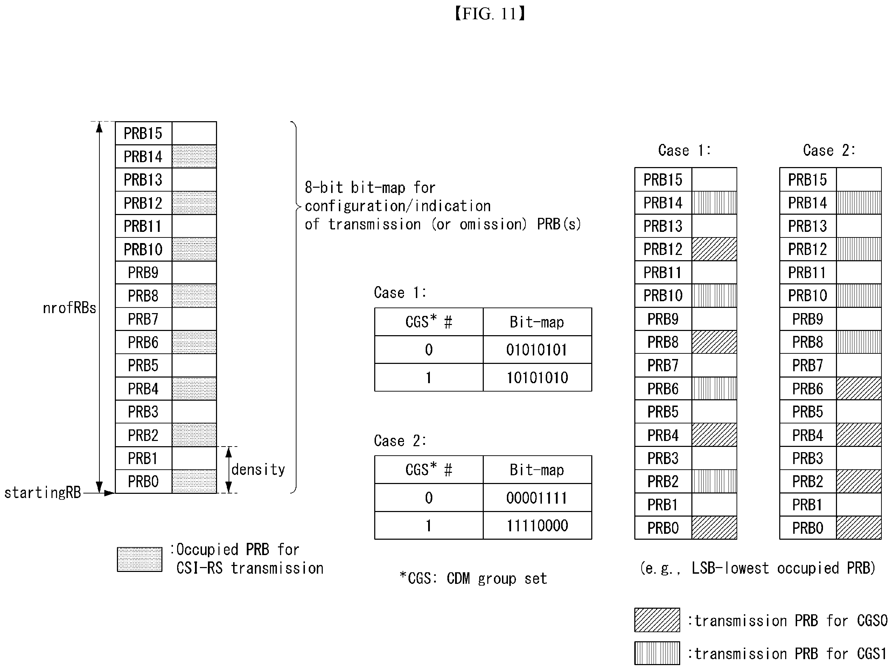

FIG. 11 illustrates an example of the bit-map scheme. That is, FIG. 11 illustrates an example in which all the (P)RBs corresponding to the CSI-RS resource are 8(P)RBs and the density is set to 0.5. The bit-map of 8-bit for all the 8(P)RBs may be constructed by corresponding the bit in units of 1(P)RB for all the 8(P)RBs. That is, each of PRB0, PRB2, PRB4, PRB6, PRB8, PRB10, PRB12, and PRB14 may correspond to 1-bit to construct 8-bit bit-map. And, (P)RB to actually transmit the RS (to omit the RS transmission) among all the (P)RBs may be configured/indicated for each CDM group set (CGS) based on the 8-bit bit-map.

For example, in Case 1 of FIG. 11, the 8-bit bit-map of '01010101' may be configured/indicated for CGS0, and the 8-bit bit-map of '10101010' may be configured/indicated for CGS 1. Here, a least significant bit (LSB) of the 8-bit bit-map may correspond to a lowest occupied PRB (i.e., PRB0 of FIG. 11). That is, an RS corresponding to the CGS0 may be transmitted in PRB2, PRB6, PRB10, and PRB14, and an RS corresponding to the CGS1 may be transmitted in PRB2, PRB6, PRB10, and PRB14. For example, in Case 2 of FIG. 11, the 8-bit bit-map of '00001111' may be configured/indicated for CGS0, and the 8-bit bit-map of '11110000' may be configured/indicated for CGS 1. That is, an RS corresponding to the CGS0 may be transmitted in PRB0, PRB2, PRB4, and PRB6, and an RS corresponding to the CGS1 may be transmitted in PRB8, PRB10, PRB12, and PRB14.

When using the proposed method, scheduling freedom of the base station can be improved by configuring/indicating actual transmission (P)RB(s) of each resource in unit of specific resource (e.g., specific CDM group(s)) and/or specific CDM group set(s)).

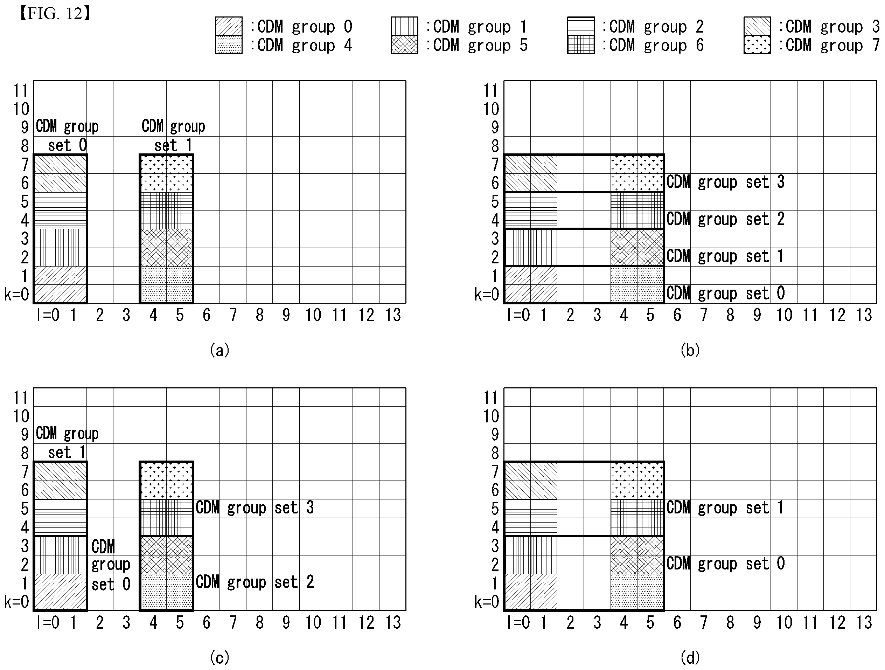

FIG. 12 illustrates an example of a method of defining a 'CDM group set' based on a time domain location and/or frequency domain location of a CDM group. FIG. 12 illustrates an example where 32 ports and cdm4-FD2-TD2 are configured.

Specifically, (a) of FIG. 12 illustrates an example of defining CDM groups having the same value $l$ as the same CDM group set. Referring to (a) of FIG. 12, CDM groups having the same value of $l_0$, $l_1$ may be defined as the same CDM group set. For example, CDM group set 0 may consist of (or include) CDM group 0, CDM group 1, CDM group 2, and CDM group 3 having l (or time location/time domain location $\bar{l}$ of Table 9) = 0, and CDM group set 1 may consist of CDM group 4, CDM group 5, CDM group 6, and CDM group 7 having l=4.

(b) of FIG. 12 illustrates an example of defining CDM groups having the same $k$ value as the same CDM group set. Referring to (b) of FIG. 12, CDM groups having the same value of $k_0$, $k_1$, $k_2$, $k_3$ may be defined as the same CDM group set. For example, CDM group set 0 may consist of CDM group 0 and CDM group 4 having k (or frequency location/frequency domain location $\bar{k}$ of Table 9) = 0, CDM group set 1 may consist of CDM group 1 and CDM group 5 having k=2, CDM group set 2 may consist of CDM group 2 and CDM group 6 having k=4, and CDM group set 3 may consist of CDM group 3 and CDM group 7 having k=6.

(c) of FIG. 12 illustrates an example of defining, for CDM groups having the same value $l$, CDM groups corresponding to some combinations (e.g., (c) of FIG. 12 illustrates an example where CDM groups are divided by $\{k_0, k_1\}$, $\{k_2, k_3\}$ ) among all frequencyDomainAllocation values as the same CDM group set. Referring to (c) of FIG. 12, for CDM groups having the same $l$ value, CDM groups corresponding to $k_0$, $k_1$ may be defined as the same CDM group set, and CDM groups corresponding to $k_2$, $k_3$ may be defined as the same CDM group set. For example, CDM group set 0 may consist of CDM group 0 and CDM group 1 having 1=0 and having k=0 or k=2, CDM group set 1 may consist of CDM group 2 and CDM group 3 having 1=0 and having k=4 or k=6, CDM group set 2 may consist of CDM group 4 and CDM group 5 having 1=4 and having k=0 or k=2, and CDM group set 3 may consist of CDM group 6 and CDM group 7 having 1=4 and having k=4 or k=6.

(d) of FIG. 12 illustrates an example of defining CDM groups corresponding to some combinations (e.g., (d) of FIG. 12 illustrates an example where CDM groups are divided by $\{k_0, k_1\}$, $\{k_2, k_3\}$) among all frequencyDomainAllocation values as the same CDM group set. Referring to (d) of FIG. 12, CDM groups corresponding to $k_0$, $k_1$ may be defined as the same CDM group set, and CDM groups corresponding to $k_2$, $k_3$ may be defined as the same CDM group set. For example, CDM group set 0 may consist of CDM group 0, CDM group 1, CDM group 4, and CDM group 5 having k=0 or k=2, and CDM group set 1 may consist of CDM group 2, CDM group 3, CDM group 6, and CDM group 7 having k=4 or k=6.

The above examples can be seen as examples for supporting the proposed method, and are not intended to be limited as a unique method. Therefore, other embodiments for supporting the proposed method can be applied.

And/or, the above proposed method(s) has proposed method(s) for reducing the actual frequency density per specific CSI-RS port within a single slot. A method for lowering the average RS overhead in the time domain may also be supported. For example, for all slots corresponding to a transmission periodicity configured to a CSI-RS resource, an actual transmission slot of each resource may be configured/indicated/defined in units of specific resource (e.g., specific CDM group(s) and/or specific CDM group set(s)).

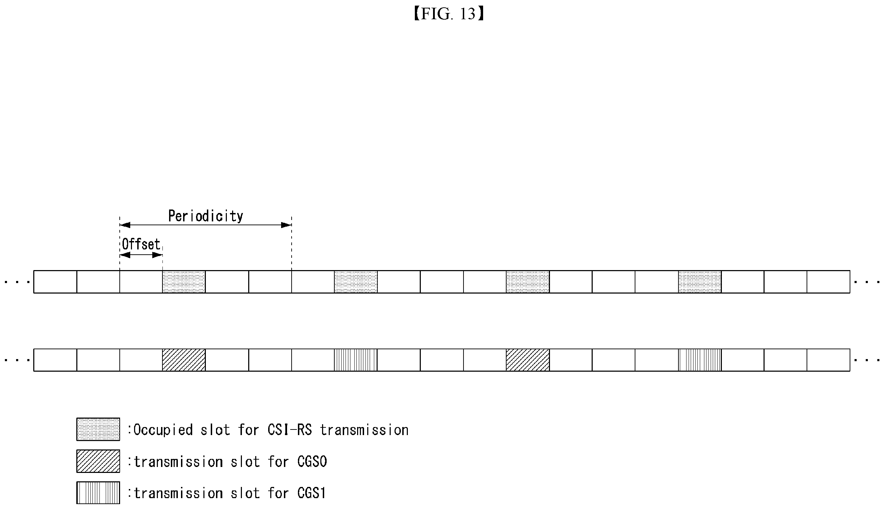

FIG. 13 illustrates an example of a method of reducing an average RS overhead using a time domain. FIG. 13 illustrates an example of a CSI-RS resource in which 1-slot offset of 4-slot periodicity is configured. For example, the periodicity and/or the offset may be configured by higher layer parameter CSI-ResourcePeriodicityAndOffset. In FIG. 13, x-axis denotes time, and a unit of one column denotes a slot. It can be seen from FIG. 13 that an actual transmission slot varies per CGS (CDM group set). A method for configuring/indicating/defining an actual transmission slot may be supported in a similar method based on the above-described method for configuring/indicating/defining actual transmission (P)RB(s).

When the above proposed method(s) is applied, a difference compared to a method of adding 0.25 density within the CSI-RS resource is as follows. When the above proposed method is used, there may be an advantage in that the actual frequency density can be more flexibly adjusted based on the total number of CDM groups defined within resources. For example, if 32port/cdm4-FD2-TD2/density 1 is assumed, the total number of CDM groups equals 8, and the actual frequency density may be controlled to 1/0.5/0.25/0.125 by controlling 'N' in the above proposed method to 8/4/2/1. And/or, if 32port/cdm4-FD2-TD2/density 0.5 is assumed, the actual frequency density may be controlled to 0.5/0.25/0.125/0.0625 by controlling 'N' to 8/4/2/1.

And/or, when the above proposed method(s) is applied, a CSI-RS sequence can apply as it is a sequence generation method defined in the current standard.

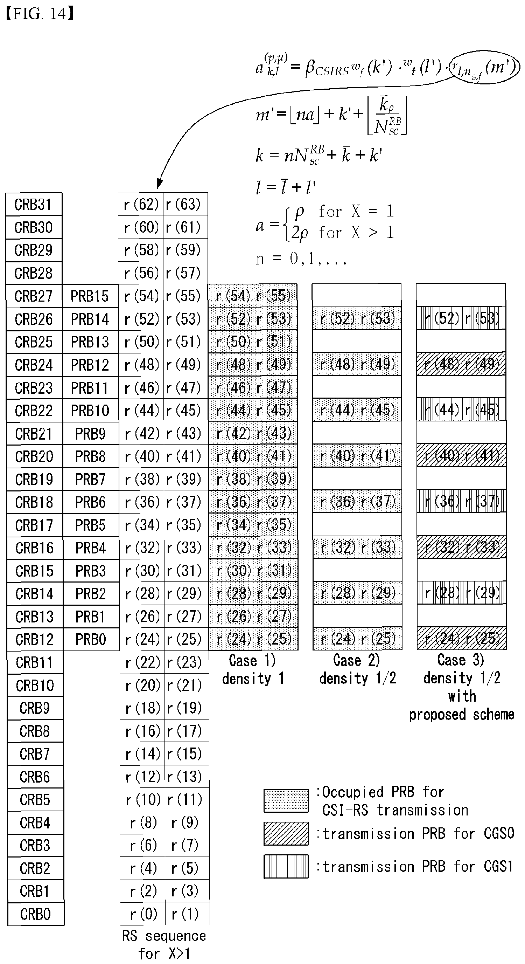

FIG. 14 illustrates an example of applying a CSI-RS sequence generating method defined in the current standard. Referring to FIG. 14, Case 1/2 show an example of a sequence corresponding to each (P)RB when a density in a CSI-RS resource is set to 1/0.5 in accordance with the current standard. Even if an actual transmission (P)RB varies for each CGS according to the proposed method, a CSI-RS sequence defined in each (P)RB may be applied to CSI-RS port(s) corresponding to a transmission CGS (e.g., Case 3 of FIG. 14).

And/or, when the above proposed method(s) is applied, a method for generating a CSI-RS sequence based on a (P)RB area in which each CGS is actually transmitted may be defined. For example, if the corresponding method is applied to Case 2 of FIG. 14, r(0),r(1) may correspond to PRBO, r(2),r(3) may correspond to PRB2, r(4),r(5) may correspond to PRB4, ..., and r(14),r(15) may correspond to PRB14. In this case, an optimized CSI-RS sequence is transmitted in an actual transmission band, and thus PAPR performance can be improved. And/or, the present disclosure may refer to the contents of the above-described CSI reference signal related to the CSI-RS sequence.

And/or, when the above proposed method(s) is applied, capability signaling of a UE related to the proposed method(s) may be introduced. That is, the UE may transmit capability information related to the proposed method(s) to a base station. For example, the capability signaling of the UE may include whether or not to support the proposed method(s) of the UE and/or codebook (CB) structure information to which the proposed method(s) can be applied. For example, the CB structure information to which the proposed method(s) can be applied may be information indicating whether it can be applied for all CBs (e.g., Rel-15/16/17/... Type I/II codebook), applied only for port selection (PS) CB (e.g., Rel-15/16/17/... Type II port selection codebook), or applied only for the specific PS CB (e.g., Rel-17 Type II port selection codebook), etc.).

And/or, in addition to the proposed method, an operation may be configured/indicated/defined that the UE may assume that CSI-RS is transmitted as it is beamformed on the same spatial domain (SD) basis per specific resource unit (e.g., CDM group and/or CDM group set and/or NZP CSI-RS resource) and is beamformed on different frequency domain (FD) basis for each CSI-RS port within the resource unit. If the operation is configured/indicated/defined, the UE may feed preferred SD basis(es) back the base station by selecting/feeding back specific resource unit(s).

## Second Embodiment

A second embodiment describes a method of indicating a repeated transmission of an RS (e.g., same/different RS sequence) for the same CSI-RS port within a specific time unit (e.g., 1/2/... symbol/slot/frame) based on a CDM group configured in a single CSI-RS resource. And/or, a proposed method of the second embodiment may refer to the contents of the CSI related operation described above.

Methods to be described below are merely distinguished for convenience of explanation. Thus, it is obvious that configuration of any method can be substituted or combined with configuration of another method.

For CSI-RS port(s) included in a single CSI-RS resource, whether or not to perform repeated transmission/the number of repeated transmissions/offset between repeated transmission time points within a specific time unit of an RS corresponding to each port may be configured/indicated/defined.

And/or, based on a CDM group (e.g., CDM group by CDM group index/time domain location/frequency domain location) corresponding to each port, whether or not to perform actual repeated transmission/the number of actual repeated transmissions/offset between actual repeated transmission time points for an RS corresponding to each port may be configured/indicated/defined.

In the proposed method, the 'specific time unit' may be interpreted as x symbol(s)/slot(s)/frame(s), etc. 'x' may correspond to an integer value and may be configured/indicated to a UE based on L1/L2 signaling, or defined based on a fixed rule.

In order to support an operation 'based on the CDM group' of the proposed method, the proposed method of the first embodiment (i.e., the method for defining the CDM group set) may be applied. For example, after each CGS is configured/indicated/defined based on the proposed method of the first embodiment, whether or not to perform actual repeated transmission/the number of actual repeated transmissions/offset between actual repeated transmission time points per CGS may be configured/indicated/defined.

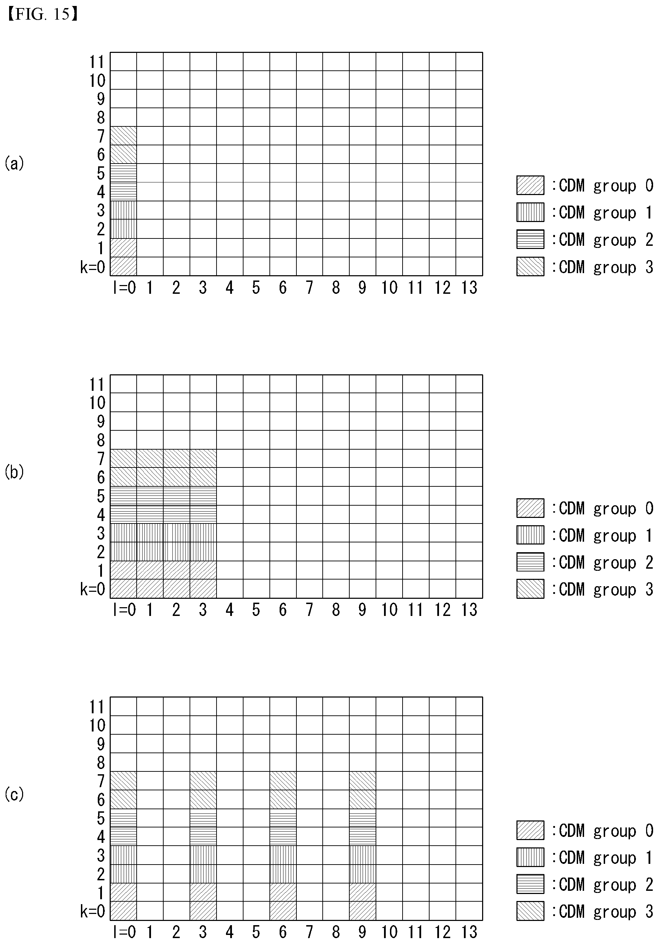

FIG. 15 illustrates an example of a method of repeatedly transmitting a CSI-RS port within the same slot. Specifically, (a) of FIG. 15 illustrates an example of not performing repeated transmission. And, (b) of FIG. 15 illustrates an example in which an offset between symbols performing repeated transmission is set to 0 (symbol) while performing repeated transmission four times. And, (c) of FIG. 15 illustrates an example in which an offset between symbols performing repeated transmission is set to 2 (symbol) while performing repeated transmission four times. In FIG. 15, CDM group 0 may include CSI-RS port 0/1, CDM group 1 may include CSI-RS port 2/3, CDM group 2 may include CSI-RS port 4/5, and CDM group 3 may include CSI-RS port 6/7.

Referring to (a) of FIG. 15, 'without repeated transmission', Sport and fd-CDM2 (row6) may be configured/assumed. That is, CDM group 0, CDM group 1, CDM group 2, and CDM group 3 may be transmitted only if 1=0.

Referring to (b) of FIG. 15, '4 repeated transmissions', '0 offset symbol', Sport and fd-CDM2 (row6) may be configured/assumed. That is, CDM group 0, CDM group 1, CDM group 2, and CDM group 3 may be repeatedly transmitted if 1=0, 1, 2, 3.

Referring to (c) of FIG. 15, '4 repeated transmissions', '2 offset symbol', Sport and fd-CDM2 (row6) may be configured/assumed. That is, CDM group 0, CDM group 1, CDM group 2, and CDM group 3 may be repeatedly transmitted if l=0, 3, 6, 9.

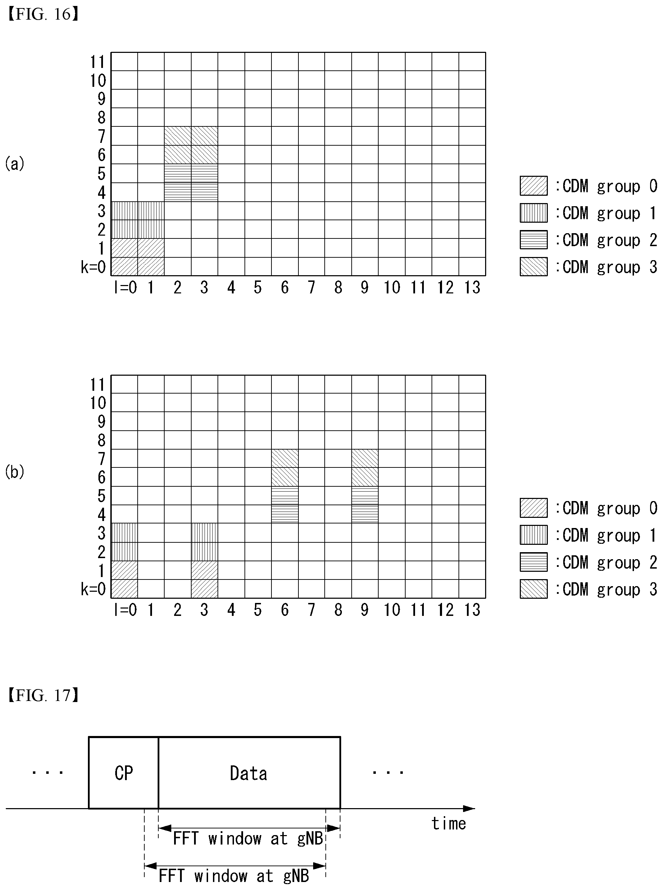

FIG. 16 illustrates an example of determining whether or not to perform actual repeated transmission/the number of actual repeated transmissions/offset between actual repeated transmission time points based on CGS. That is, (a) and (b) of FIG. 16 each illustrate an example of determining whether or not to perform actual repeated transmission/the number of actual repeated transmissions/offset between actual repeated transmission time points per CDM group set. In FIG. 16, CDM group set 0 may include CDM group 0/1, and CDM group set 1 may include CDM group 2/3.

Referring to (a) of FIG. 16, '4 repeated transmissions', '0 offset symbol', Sport and fd-CDM2 (row6) may be configured/assumed. That is, CDM group set 0 may be transmitted if 1=0, 1, and CDM group set 1 may be transmitted if 1=2, 3.

Referring to (b) of FIG. 16, '4 repeated transmissions', '2 offset symbol', Sport and fd-CDM2 (row6) may be configured/assumed. That is, CDM group set 0 may be transmitted if 1=0, 3, and CDM group set 1 may be transmitted if 1=6, 9.

The examples of FIG. 16 have assumed an example in which 1st CGS/1st CGS/2nd CGS/2nd CGS is mapped and transmitted within all repeated durations, but it can be configured/indicated/defined in other orders. For example, a method may be applied to configure/indicate/define it to the UE per CGS by constructing a bit-map for all the repeated durations after each time point within the repeated duration corresponds to 1-bit.

And/or, when the proposed method is applied, 'CDM group' and/or 'CDM group set' can correspond to a specific CSI-RS port. In this case, the following signaling method may be introduced. In the following signaling example, 'port x' may be replaced by CDM group k and/or CDM group set p.

For example, 4 port CSI-RS resource#0 with duration=4 (i.e., all repeated transmission durations (e.g., x symbol/slot/frame, etc.)) and no TDM (time division multiplexing) (or TD-density=1) may be configured/indicated/defined. In this case, in symbol#{y, y+1, y+2, y+3} of slot#x, existing 4 port CSI-RS resources may be repeatedly transmitted (i.e., {port0~3, port0~3, port0~3, port0~3}).

And/or, for another example, 4 port CSI-RS resource#0 with duration=4 and TDM type#1 (or TD-density=0.5) may be configured/indicated/defined. In this case, in symbol#{y, y+1, y+2, y+3} of slot#x, {port0~1, port2~3, port0~1, port2~3} may be transmitted. Here, FD density of each port may be automatically determined to 1/2 compared to no TDM (e.g., 0.5).

And/or, for another example, 4 port CSI-RS resource#0 with duration=4 and TDM type#2 (or TD-density=0.25) may be configured/indicated/defined. In this case, in slot#x symbol#{y, y+1, y+2, y+3}, {port0, port1, port2, port3} may be transmitted. Here, FD density of each port may be automatically determined to 1/4 compared to no TDM (e.g., 0.25).

And/or, for another example, density configuration type A, B, C..., etc. combining FD density and TD density may be defined.

## Third Embodiment

A third embodiment describes a method of transmitting a QCL reference RS of a CSI-RS resource based on a CSI-RS resource reception point for CM for CSI acquisition/reporting. And/or, a proposed method of the third embodiment may refer to the contents of the CSI related operation described above.

Before describing the third embodiment, a problem caused by timing mismatch between a base station (BS) and a UE will be first described.

When a time point (e.g., starting point) for fast Fourier transform (FFT) window of the BS and the UE is named as a sampling time, the sampling time may vary depending on implementation/a reception point of a reference signal (RS)/a reception point of a control signal and/or a data signal (compared to the reception point of the RS), etc. at each of the BS and the UE. FIG. 17 illustrates an example of a difference in the sampling time between the base station and the UE. As illustrated in FIG. 17, a starting point of FFT window of the base station (next generation NodeB, gNB) and the user equipment (UE) may vary depending on the above elements.

As described in an example of FIG. 17, when there is a difference in the sampling time between the base station and the UE, even if perfect delay reciprocity can be assumed between DL/UL channels, a valid channel of the UE expected by the base station and an actual valid channel of the UE may be different due to the mismatch in the sampling time between the base station and the UE. For example, if sampling timing mismatch corresponding to 5 samples is assumed between the base station and the UE, the base station may expect that a first tap will appear in x-th sample based on an uplink (UL) channel. However, from a UE perspective, the first tap may appear in (x+5)-th sample. Here, the tap may refer to a channel impulse response between the base station and the UE. That is, the first tap may mean a first sample of the channel impulse response. In this case, the timing mismatch may cause a phase shift for a frequency domain channel. As a result, the timing mismatch may affect a wideband operation of the UE, and an error may occur between an estimated value expected by the base station and a coefficient actually estimated by the UE. Equations 8 and 9 show a simple example of the effect.

Equation 8 shows an example of an UL channel of a BS perspective.

【Equation 8】

$$(h^{UL})^T = (c^{UL})^T F^H = (c^{UL})^T \begin{bmatrix} f_0^H \\ f_1^H \\ f_2^H \\ f_3^H \end{bmatrix}$$

$$= [c_0 \quad c_1 \quad c_2 \quad c_3] \begin{bmatrix} conj(f_{0,0}) & conj(f_{0,1}) & conj(f_{0,2}) & conj(f_{0,3}) \\ conj(f_{1,0}) & conj(f_{1,1}) & conj(f_{1,2}) & conj(f_{1,3}) \\ conj(f_{2,0}) & conj(f_{2,1}) & conj(f_{2,2}) & conj(f_{2,3}) \\ conj(f_{3,0}) & conj(f_{3,1}) & conj(f_{3,2}) & conj(f_{3,3}) \end{bmatrix}$$

Here, $h^{UL}(h^{UL} \in \mathbb{C}^{N_f \times 1}$ ) is an example of an UL channel vector received at a specific port of the base station, and $N_f$ is a size of a band (e.g., the total number of subcarriers) in which RS is transmitted for UL/DL channel estimation and is assumed as 4 in this example. And, $F$ is a unitary matrix for a frequency domain of the UL channel, and $c^{UL}$ is a coefficient vector for each column vector of the unitary matrix.

Equation 9 shows an example of a DL channel of a UE perspective.

【Equation 9】

$$(h^{DL})^T = (c^{DL})^T F^H = (c^{DL})^T \begin{bmatrix} f_0^H \\ f_1^H \\ f_2^H \\ f_3^H \end{bmatrix}$$

$$= [c'_0 \quad c'_1 \quad c'_2 \quad c'_3] \begin{bmatrix} conj(f_{0,0}) & conj(f_{0,1}) & conj(f_{0,2}) & conj(f_{0,3}) \\ conj(f_{1,0}) & conj(f_{1,1}) & conj(f_{1,2}) & conj(f_{1,3}) \\ conj(f_{2,0}) & conj(f_{2,1}) & conj(f_{2,2}) & conj(f_{2,3}) \\ conj(f_{3,0}) & conj(f_{3,1}) & conj(f_{3,2}) & conj(f_{3,3}) \end{bmatrix}$$

Here, ideal DL/LTL delay reciprocity may be assumed, and a unitary matrix of the same frequency domain as the UL channel may be assumed. And, $c^{DL}$ is a coefficient vector of the DL channel for each column vector of the unitary matrix.

Equation 10 shows an example of a DL channel of a UE perspective when the base station applies precoding to the frequency domain.

Here, it is assumed that a specific vector within a unitary matrix for the frequency domain of the UL channel is applied as a precoder. If the base station assumes the ideal DL/LTL delay reciprocity and intends to allow the UE to report channel coefficient related information based on the wideband operation, the precoder may be assumed.

【Equation 10】

$$\left(\boldsymbol{h}_0^{DL,pre}\right)^T = (\boldsymbol{h}^{DL})^T \boldsymbol{F}_0^{pre} = (\boldsymbol{c}^{DL})^T \boldsymbol{F}^H \boldsymbol{F}_0^{pre}$$

$$= [c'_0 \quad c'_1 \quad c'_2 \quad c'_3] \begin{bmatrix} conj(f_{0,0}) & conj(f_{0,1}) & conj(f_{0,2}) & conj(f_{0,3}) \\ conj(f_{1,0}) & conj(f_{1,1}) & conj(f_{1,2}) & conj(f_{1,3}) \\ conj(f_{2,0}) & conj(f_{2,1}) & conj(f_{2,2}) & conj(f_{2,3}) \\ conj(f_{3,0}) & conj(f_{3,1}) & conj(f_{3,2}) & conj(f_{3,3}) \end{bmatrix} \begin{bmatrix} f_{0,0} & 0 & 0 & 0 \\ 0 & f_{0,1} & 0 & 0 \\ 0 & 0 & f_{0,2} & 0 \\ 0 & 0 & 0 & f_{0,3} \end{bmatrix}$$

$$= [c'_0 \quad c'_1 \quad c'_2 \quad c'_3] \begin{bmatrix} conj(f_{0,0})f_{0,0} & conj(f_{0,1})f_{0,1} & conj(f_{0,2})f_{0,2} & conj(f_{0,3})f_{0,3} \\ conj(f_{1,0})f_{0,0} & conj(f_{1,1})f_{0,1} & conj(f_{1,2})f_{0,2} & conj(f_{1,3})f_{0,3} \\ conj(f_{2,0})f_{0,0} & conj(f_{2,1})f_{0,1} & conj(f_{2,2})f_{0,2} & conj(f_{2,3})f_{0,3} \\ conj(f_{3,0})f_{0,0} & conj(f_{3,1})f_{0,1} & conj(f_{3,2})f_{0,2} & conj(f_{3,3})f_{0,3} \end{bmatrix}$$

$$= \begin{bmatrix} c'_0 conj(f_{0,0})f_{0,0} + c'_1 conj(f_{1,0})f_{0,0} + c'_2 conj(f_{2,0})f_{0,0} + c'_3 conj(f_{3,0})f_{0,0} \\ c'_0 conj(f_{0,1})f_{0,1} + c'_1 conj(f_{1,1})f_{0,1} + c'_2 conj(f_{2,1})f_{0,1} + c'_3 conj(f_{3,1})f_{0,1} \\ c'_0 conj(f_{0,2})f_{0,2} + c'_1 conj(f_{1,2})f_{0,2} + c'_2 conj(f_{2,2})f_{0,2} + c'_3 conj(f_{3,2})f_{0,2} \\ c'_0 conj(f_{0,3})f_{0,3} + c'_1 conj(f_{1,3})f_{0,3} + c'_2 conj(f_{2,3})f_{0,3} + c'_3 conj(f_{3,3})f_{0,3} \end{bmatrix}^T$$

Here, $\boldsymbol{F}_i^{pre}$ is a precoding matrix based on an i-th column vector of the unitary matrix for the frequency domain.

Equation 11 shows an example where the UE sums up respective samples for all bands in which CSI-RS is transmitted when precoding is applied to the frequency domain.

【Equation 11】

$$\sum_{n=0}^{3} \boldsymbol{h}_0^{DL,pre}(n) = \begin{cases} c'_0\left(conj(f_{0,0})f_{0,0} + conj(f_{0,1})f_{0,1} + conj(f_{0,2})f_{0,2} + conj(f_{0,3})f_{0,3}\right) + \\ c'_1\left(conj(f_{1,0})f_{0,0} + conj(f_{1,1})f_{0,1} + conj(f_{1,2})f_{0,2} + conj(f_{1,3})f_{0,3}\right) + \\ c'_2\left(conj(f_{2,0})f_{0,0} + conj(f_{2,1})f_{0,1} + conj(f_{2,2})f_{0,2} + conj(f_{2,3})f_{0,3}\right) + \\ c'_3\left(conj(f_{3,0})f_{0,0} + conj(f_{3,1})f_{0,1} + conj(f_{3,2})f_{0,2} + conj(f_{3,3})f_{0,3}\right) \end{cases}$$

$$= c'_0$$

Here, the UE may estimate a coefficient for a specific vector (e.g., first vector) within the unitary matrix of the frequency domain through the wideband operation (i.e., sum).

Equation 12 shows an example of a downlink (DL) channel of a UE perspective when timing mismatch exists between the base station and the UE and the base station applies the precoding to the frequency domain.

【Equation 12】

$$\left(\boldsymbol{h}_0^{DL,pre,del}\right)^T = \left(\boldsymbol{h}_0^{DL,pre}\right)^T \boldsymbol{D}^{del} = \left(\boldsymbol{h}_0^{DL,pre}\right)^T \begin{bmatrix} e^{j\theta_0} & 0 & 0 & 0 \\ 0 & e^{j\theta_1} & 0 & 0 \\ 0 & 0 & e^{j\theta_2} & 0 \\ 0 & 0 & 0 & e^{j\theta_3} \end{bmatrix}$$

Here, $\boldsymbol{D}^{del}$ is a phase shift matrix due to timing mismatch.

Equation 13 shows an example where the UE sums up respective samples for all bands in which CSI-RS is transmitted when precoding is applied to the frequency domain.

【Equation 13】

$$\sum_{n=0}^{3} \boldsymbol{h}_0^{DL,pre,del}(n)$$

$$= \begin{cases} c'_0\left(conj(f_{0,0})f_{0,0}e^{j\theta_0} + conj(f_{0,1})f_{0,1}e^{j\theta_1} + conj(f_{0,2})f_{0,2}e^{j\theta_2} + conj(f_{0,3})f_{0,3}e^{j\theta_3}\right) + \\ c'_1\left(conj(f_{1,0})f_{0,0}e^{j\theta_0} + conj(f_{1,1})f_{0,1}e^{j\theta_1} + conj(f_{1,2})f_{0,2}e^{j\theta_2} + conj(f_{1,3})f_{0,3}e^{j\theta_3}\right) + \\ c'_2\left(conj(f_{2,0})f_{0,0}e^{j\theta_0} + conj(f_{2,1})f_{0,1}e^{j\theta_1} + conj(f_{2,2})f_{0,2}e^{j\theta_2} + conj(f_{2,3})f_{0,3}e^{j\theta_3}\right) + \\ c'_3\left(conj(f_{3,0})f_{0,0}e^{j\theta_0} + conj(f_{3,1})f_{0,1}e^{j\theta_1} + conj(f_{3,2})f_{0,2}e^{j\theta_2} + conj(f_{3,3})f_{0,3}e^{j\theta_3}\right) \end{cases}$$

$$= \alpha \cdot c'_0 + \Delta$$

As can be seen in the example above, when the UE performs the wideband operation, due to the timing mismatch between the base station and the UE, orthogonality is not maintained for the unitary matrix of the frequency domain, and an error may occur when the UE estimates the coefficient.

The present embodiment proposes a method for improving DL/UL channel reciprocity by mitigating the timing mismatch between the base station and the UE that may cause the above-described problem, and improving the efficiency and accuracy of a CSI feedback process. That is, the present embodiment describes a method of transmitting (additionally/aperiodically/dynamically/automatically) a QCL reference RS of the CSI-RS resource based on a CSI-RS resource reception point for CM (channel measurement) for CSI acquisition/reporting.

Although the present disclosure has described the timing mismatch as the main cause of the problem, it is obvious that the proposed method can also be applied as a method for mitigating (non-ideal) impairment of the BS/UE and errors due to a time-varying effect on DL/LTL channel (e.g., Doppler effect/channel aging, etc.), in addition to the timing mismatch.

Methods to be described below are merely distinguished for convenience of explanation. Thus, it is obvious that configuration of any method can be substituted or combined with configuration of another method.

Specific QCL reference RS(s) may be mapped/configured for NZP CSI-RS resource set(s) and/or resource(s) for CM configured in specific reporting setting and/or the corresponding reporting setting, and the specific QCL reference RS(s) may be transmitted at a time point X-Y based on a transmission time point X of the NZP CSI-RS resource set(s)/resource(s) for CM. For example, the specific QCL reference RS may be a tracking reference signal (TRS).

In the above, an example of the 'specific reporting setting' may include reporting setting configured with specific reportQuantity (e.g., cri-RI-PMI-CQI, cri-RI-LI-PMI-CQI) and/or specific codebookConfig (e.g., typeII-PortSelection). Alternatively, reporting setting configured/indicated to perform the proposed operation may be used.

In the proposed method, in addition to 'NZP CSI-RS resource set(s) and/or resource(s) for CM configured in specific reporting setting and/or the corresponding reporting setting', the 'specific QCL reference RS(s)' can be transmitted for PDSCH (and/or DMRS for the corresponding PDSCH)/PDCCH (and/or DMRS for the corresponding PDCCH) based on the proposed method.

For this purpose, in the description below, 'NZP CSI-RS resource set(s) and/or resource(s) for CM configured in specific reporting setting and/or the corresponding reporting setting' may be replaced by a specific physical downlink shared channel (PDSCH) (and/or a demodulation reference signal (DMRS) for the corresponding PDSCH)/physical downlink control channel (PDCCH) (and/or a DMRS for the corresponding PDCCH).

In the proposed method, an example of the 'specific QCL reference RS(s)' may include CSI-RS/synchronization signal block (SSB) for CSI-RS/beam management (BM) for specific TRS/CM. The specific TRS may mean specific NZP (non-zero power) CSI-RS resource (set) configured with trs-Info. As an example of a method of 'mapping/configuring specific QCL reference RS(s)', the TRS as the QCL reference RS may be configured to resources within an NZP CSI-RS resource set for CM configured in specific reporting setting, and the TRS may be defined to be assumed as the 'specific QCL reference RS'. To describe this more generally, QCL reference RS(s) configured/indicated/defined (configured/indicated/defined by the current standard) to QCL target RS(s)/channel(s) may be defined to correspond to the 'specific QCL reference RS(s)'.

In the proposed method, 'Y' value may be configured/indicated by the base station to the UE based on L1/L2 signaling, or defined in standard based on a fixed rule. X and Y values may be defined based on a specific time unit. For example, the specific time unit may include symbol(s), slot(s), and the like. 'Y' may correspond to any integer value. For example, if Y=0, it may be assumed that it is transmitted in the same symbol/slot as a symbol/slot in which the NZP CSI-RS resource set(s)/resource(s) for CM is transmitted. If Y=1, it may be assumed that it is transmitted prior to 1 symbol/slot compared to a symbol/slot in which the NZP CSI-RS resource set(s)/resource(s) for CM is transmitted.

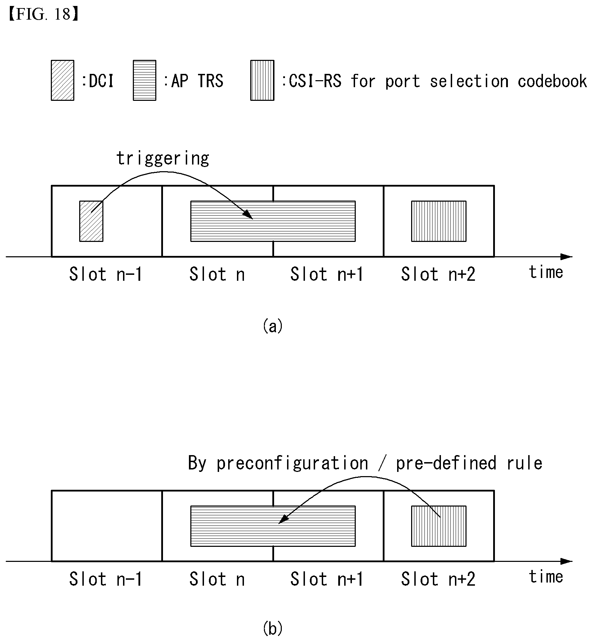

FIG. 18 illustrates a difference between a current standard operation and a proposed method.

(a) of FIG. 18 shows an example in which an aperiodic (AP) TRS is triggered based on the current standard and is transmitted in a slot immediately contiguous to the CSI-RS resource for CM. That is, (a) of FIG. 18 shows an example of an operation according to an AP TRS triggering method of the current standard. (b) of FIG. 18 shows an example in which an AP TRS is transmitted based on a transmission time point of the CSI-RS resource for CM using pre-configuration and/or pre-defined rule based on the proposed method. That is, (b) of FIG. 18 shows an example of an operation in which an AP TRS is transmitted based on a transmission time point of the CSI-RS resource for CM according to the proposed method. In (b) of FIG. 18, it is assumed that X is slot n+2, and Y is 2.

In the proposed method, the TRS corresponding to the 'specific QCL reference RS(s)' may be limited to be transmitted in a single slot regardless of a configuration value for the TRS.

The proposed method may be configured/indicated by the base station to the UE, or defined based on a fixed rule so that a measurement restriction (e.g., one-shot measurement) is applied for the 'NZP CSI-RS resource set(s) and/or resource(s) for CM configured in specific reporting setting and/or the corresponding reporting setting' and/or the 'specific QCL reference RS(s)'.

For example, if a codebook type triggers reporting setting configured with Type II port selection codebook (Type II PS CB), a CSI-RS resource connected to the reporting setting may be limited to an aperiodic (AP) resource, and/or it may be defined so that only the measurement restriction (e.g., one-shot measurement) is allowed for P (periodic)/SP (semipersistent) CSI-RS. For another example, the specific QCL reference RS(s) may be defined so that the measurement is performed only for RS(s) closest to a transmission time point of a target RS/channel (e.g., 'NZP CSI-RS resource set(s) and/or resource(s) for CM configured in specific reporting setting and/or the corresponding reporting setting').

The proposed method has an advantage in that DL/LTL timing mismatch can be mitigated by reducing a timing error (i.e., sample timing offset (STO)) of the UE in a situation in which the base station adjusts a transmission time point for an UL signal/channel and a point, at which a sample timing offset (STO) is close to 0 from a BS perspective, is sampling time. The base station may properly configure/indicate the periodic (P) TRS and/or the aperiodic (AP) TRS based on the current standard at any time. However, the P TRS may increase an unnecessary RS overhead, and the AP TRS may have a disadvantage of an increase in unnecessary signaling since the AP TRS shall be always triggered via downlink control information (DCI). The proposed method can mitigate the DL/LTL timing mismatch by providing the TRS in the same/previous slot and reducing a timing error (i.e., STO) of the UE based on a time point at which CSI-RS resource for CM (e.g., NZP CSI-RS resource for Type II PS CB) is transmitted.

And/or, in addition to the proposed method, a method may be applied in which the base station configures/indicates, to the UE, timing mismatch related information (e.g., delay/timing offset, etc.), and/or the UE reports them to the base station. For example, a method may be applied in which the base station configures/indicates, to the UE, information on mean/variation/margin for delay characteristics of a valid channel, and/or the UE reports it to the base station.

And/or, if the timing mismatch occurs between the base station and the UE, the UE may newly report a codebook including frequency domain (FD) basis based on a timing error (based on a CM measurement value of the UE), and/or the UE may omit a report for the FD basis when there is no timing error. Since this affects feedback payload, whether or not the corresponding timing error occurs or whether or not to report the FD basis may be included in part 1 CSI as 1-bit. And/or, the UE may additionally report, to the base station, a value capable of representing a timing error value (e.g., values of delay (per spatial domain (SD) beam) and/or mean and/or variance or timing error value). When the value is reported, the UE may omit a report for the FD basis, and the base station may compensate for impairment using the reported information.

And/or, a method may be applied, in which the base station configures/indicates, to the UE, a criterion for linear combination (LC) coefficient selection with respect to a specific codebook (e.g., Type II PS CB). In this case, the base station may configure/indicate a minimum value to the UE, and the UE may report only a coefficient exceeding the minimum value.

In the present disclosure, the base station may be one base station including a plurality of Transmission and Reception Points (TRPs), and may be one cell including a plurality of TRPs. Alternatively, the base station may include a plurality of remote radio heads (RRHs)/remote radio units (RRUs). For example, ideal/non-ideal backhaul may be configured between TRP 1 and TRP 2 constituting the base station. Further, the present disclosure can also be equally extended and applied to transmission via multiple panels/cells, and can also be extended and applied to transmission via multiple RRHs/RRUs, etc.

And/or, the "TRP" may be applied by being replaced by expressions such as a panel, an antenna array, a cell (e.g., macro cell/small cell/pico cell, etc.), a transmission point (TP), and a base station (e.g., gNB, etc.). The base station may mean a generic term for an object performing transmission and reception of data with the UE. For example, the base station may be a concept including one or more transmission points (TPs), one or more TRPs, etc. The TP and/or the TRP may include a panel, a transmission and reception unit, etc. of the base station.

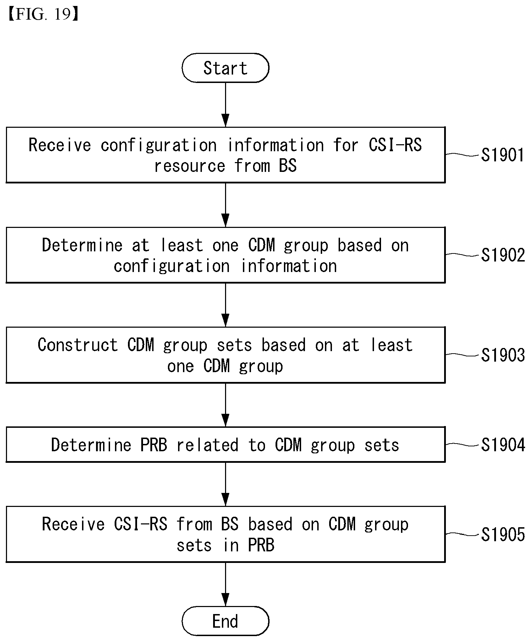

FIG. 19 is a flow chart illustrating an operation method of a UE described in the present disclosure.

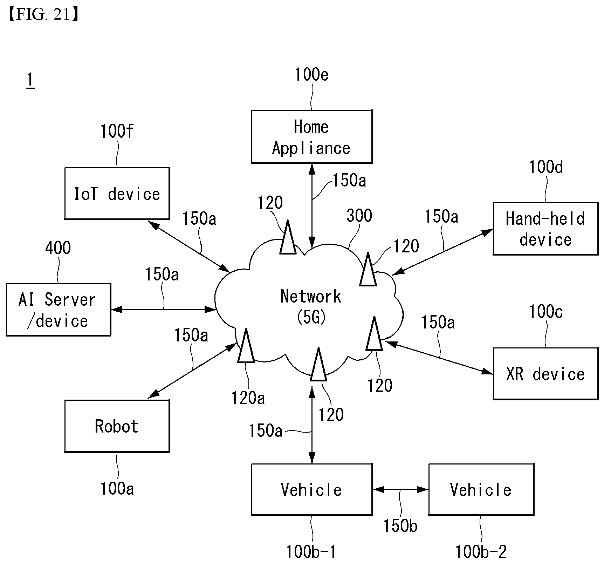

Referring to FIG. 19, first, a UE (100/200 of FIGS. 21 to 24) may receive, from a base station, configuration information for a CSI-RS resource (e.g., CSI-RS-ResourceMapping IE of Table 7), in step S1901. And/or, the configuration information may include at least one of information on the number of antenna ports (e.g., higher layer parameter nrofPorts of Table 7), information on a density (e.g., higher layer parameter density of Table 7), and/or information on a CDM type (e.g., higher layer parameter cdm-Type of Table 7).

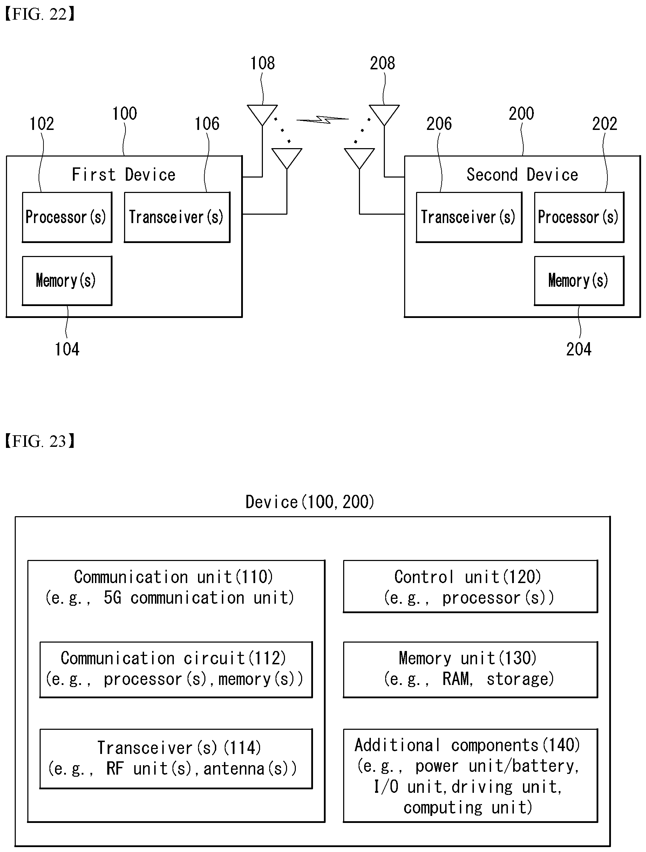

For example, an operation of the UE to receive the configuration information in step S1901 may be implemented by a device of FIGS. 21 to 24. For example, referring to FIG. 22, one or more processors 102/202 may control one or more memories 104/204 and/or one or more transceivers 106/206 so as to receive the configuration information.

And/or, the UE (100/200 of FIGS. 21 to 24) may determine at least one code division multiplexing (CDM) group based on the configuration information, in step S1902. For example, the UE may determine the at least one CDM group (e.g., CDM group index/time/frequency locations of CDM group/the number of CDM groups) based on the configuration information and Table 9. For example, the detailed operation determining the at least one CDM group may refer to the contents of the CSI related operation described above.

For example, an operation of the UE to determine the at least one CDM group in step S1902 may be implemented by the device of FIGS. 21 to 24. For example, referring to FIG. 22, one or more processors 102/202 may determine the at least one CDM group. And/or, one or more processors 102/202 may control one or more memories 104/204 and/or one or more transceivers 106/206 so as to determine the at least one CDM group.

And/or, the UE (100/200 of FIGS. 21 to 24) may construct (and/or determine) CDM group sets based on the at least one CDM group, in step S1903.

For example, the UE may receive, from the base station, information on the CDM group set (in order to construct the CDM group sets). And/or, the UE may construct CDM group sets using the at least one CDM group based on the information on the CDM group set. And/or, the information on the CDM group set may represent the number of CDM groups (e.g., N) corresponding to the same PRB. As above, the proposed method according to the present disclosure can reduce an actual frequency density of the CSI-RS to less than or equal to 0.5 through the information on the CDM group set (e.g., N), and flexibly adjust the actual frequency density. For example, if 32port/cdm4-FD2-TD2/density is assumed as 1, the total number of CDM groups equals 8, and the actual frequency density may be controlled to 1/0.5/0.25/0.125 by controlling 'N' to 8/4/2/1. And/or, if 32port/cdm4-FD2-TD2/density is assumed as 0.5, the actual frequency density may be controlled to 0.5/0.25/0.125/0.0625 by controlling 'N' to 8/4/2/1.

For example, since CDM group 0, CDM group 1, CDM group 2, and CDM group 3 of FIG. 9 correspond to the same PRB, they may construct one CDM group set. For example, CDM group 0 and CDM group 1 of FIG. 10 may construct a first CDM group set, and CDM group 2 and CDM group 3 of FIG. 10 may construct a second CDM group set.

And/or, the UE may receive the information on the CDM group set (e.g., N). And/or, the UE may construct N CDM groups in index order into CDM group sets.

And/or, the configuration information may further include information on the frequency domain location (e.g., higher layer parameter frequencyDomainAllocation of Table 7) and/or information on the time domain location (e.g., higher layer parameter firstOFDMSymbolInTimeDomain/firstOFDMSymbolInTimeDomain2 of Table 7). And/or, the CDM group sets may be constructed based on a frequency domain location and/or a time domain location (or $(\overline{k,l})$ of Table 9) of at least one CDM group. For example, a detailed operation constructing the CDM group sets based on the frequency domain location and/or the time domain location may refer to the operation/method described above with reference to FIG. 12 (e.g., the first embodiment).

For example, an operation of the UE to construct the CDM group sets in step S 1903 may be implemented by the device of FIGS. 21 to 24. For example, referring to FIG. 22, one or more processors 102/202 may construct the CDM group sets. And/or, one or more processors 102/202 may control one or more memories 104/204 and/or one or more transceivers 106/206 so as to construct the CDM group sets.

And/or, the UE (100/200 of FIGS. 21 to 24) may determine a physical resource block (PRB) related to the CDM group sets, in step S 1904. And/or, a different CDM group set may correspond to a different PRB. In the present disclosure, the 'PRB' may include 'one or more PRBs'.

For example, the UE may receive, from the base station, resource information on the CDM group set (in order to determine the PRB). And/or, the UE may determine the PRB related to the CDM group sets based on bitmaps (included in the resource information). And/or, the resource information may include bitmaps representing a PRB related to each CDM group set within the CSI-RS resource. For example, the CSI-RS resource may mean a PRB occupied for CSI-RS transmission. For example, the CSI-RS resource may be determined based on higher layer parameters nrofRBs, startingRB, and density.

For example, referring to FIG. 11, the CSI-RS resource may mean PRB0, PRB2, PRB4, PRB6, PRB8, PRB10, PRB12, and PRB14. For the Case 2, the resource information may include bitmap '00001111' for a first CDM group set (i.e., CGS0) and bitmap '11110000' for a second CDM group set (i.e., CGS1). For example, the corresponding bitmap may correspond to a PRB in which least significant bit (LSB) is the lowest. The UE may determine PRBs related to the first CDM group set and the second CDM group set based on the resource information. That is, the first CDM group set may correspond to PRB0, PRB2, PRB4, and PRB6, and the second CDM group set may correspond to PRB8, PRB10, PRB12, and PRB 14. More detailed operation may refer to the contents described with reference to FIG. 11 (e.g., the first embodiment).

And/or, the CDM group sets may include the first CDM group set and the second CDM group set. The first CDM group set may correspond to an odd-numbered PRB within the CSI-RS resource, and the second CDM group set may correspond to an even-numbered PRB within the CSI-RS resource. For example, referring to FIG. 10, the first CDM group set (i.e., CDM group 0 and CDM group 1) may correspond to PRB0, PRB4, PRB8, and PRB12, and the first CDM group set (i.e., CDM group 2 and CDM group 3) may correspond to PRB2, PRB6, PRB10, and PRB14.

And/or, a CSI-RS (or a sequence of a CSI-RS) may be generated based on a PRB corresponding to at least one CDM group set. For example, referring to FIG. 14, when it is applied to the CSI-RS resource of the Case 2, r(0), r(1) may correspond to PRB0, r(2),r(3) may correspond to PRB2, r(4),r(5) may correspond to PRB4, ..., r(14),r(15) may correspond to PRB14. For example, the sequence of the CSI-RS may be generated based on PRBs corresponding to CDM group sets.

For example, an operation of the UE to determine the PRB in step S1904 may be implemented by the device of FIGS. 21 to 24. For example, referring to FIG. 22, one or more processors 102/202 may determine the PRB. And/or, one or more processors 102/202 may control one or more memories 104/204 and/or one or more transceivers 106/206 so as to determine the PRB.

And/or, the UE (100/200 of FIGS. 21 to 24) may receive, from the base station, the CSI-RS based on the CDM group sets in the PRB, in step S1905. For example, the UE may receive the CSI-RS based on at least one antenna port included in at least one CDM group within each CDM group set on the PRB corresponding to each CDM group set. A detailed operation may refer to the contents of the CSI related operation, etc. described above.

For example, an operation of the UE to receive the CSI-RS from the base station in step S1905 may be implemented by the device of FIGS. 21 to 24. For example, referring to FIG. 22, one or more processors 102/202 may control one or more memories 104/204 and/or one or more transceivers 106/206 so as to receive the CSI-RS.

The operation of the UE described with reference to FIG. 19 may refer to the contents of the CSI related operation, etc. described above.

Since the operation of the UE described with reference to FIG. 19 is the same as the operation of the UE described with reference to FIGS. 1 to 18 (e.g., the first to third embodiments), other detailed descriptions are omitted.

The signaling and operation described above may be implemented by a device (e.g., FIGS. 21 to 24) to be described later. For example, the signaling and operation described above may be processed by one or more processors of FIGS. 21 to 24. Further, the signaling and operation described above may be stored in a memory in the form of commands/programs (e.g., instructions, executable codes) for running one or more processors of FIGS. 21 to 24.

For example, a processing apparatus configured to control a UE to receive a channel state information-reference signal (CSI-RS) in a wireless communication system comprises at least one processor, and at least one memory operably connected to the at least one processor, wherein the at least one memory is configured to store instructions performing operations based on being executed by the at least one processor. The operations comprise receiving, from a base station, configuration information for a CSI-RS resource, the configuration information including information on a number of antenna ports, information on a density, and information on a code division multiplexing (CDM) type, determining at least one CDM group based on the configuration information, constructing CDM group sets based on the at least one CDM group, determining a physical resource block (PRB) related to the CDM group sets, wherein a different CDM group set is related to a different PRB, and receiving, from the base station, the CSI-RS based on the CDM group sets in the PRB.

For another example, in a computer readable storage medium storing at least one instruction allowing at least one processor to control operation based on being executed by the at least one processor, the operations comprise receiving, from a base station, configuration information for a channel state information-reference signal (CSI-RS) resource, the configuration information including information on a number of antenna ports, information on a density, and information on a code division multiplexing (CDM) type, determining at least one CDM group based on the configuration information, constructing CDM group sets based on the at least one CDM group, determining a physical resource block (PRB) related to the CDM group sets, wherein a different CDM group set is related to a different PRB, and receiving, from the base station, the CSI-RS based on the CDM group sets in the PRB.

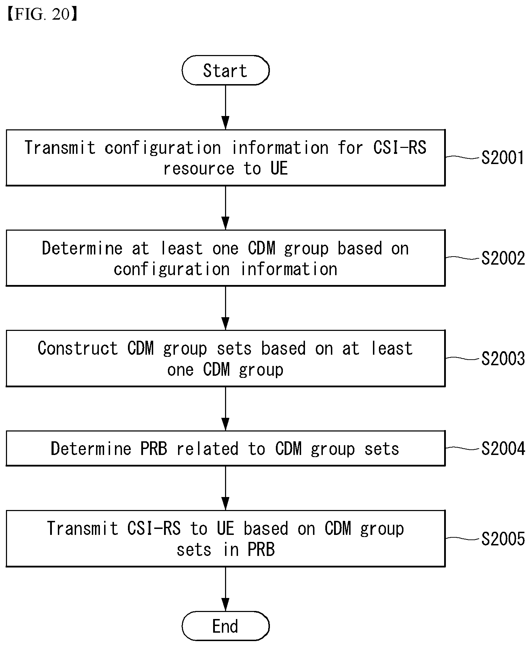

FIG. 20 is a flow chart illustrating an operation method of a base station described in the present disclosure.

Referring to FIG. 20, first, a base station (100/200 of FIGS. 21 to 24) may transmit, to a UE, configuration information for a CSI-RS resource (e.g., CSI-RS-ResourceMapping IE of Table 7), in step S2001. And/or, the configuration information may include at least one of information on the number of antenna ports (e.g., higher layer parameter nrofPorts of Table 7), information on a density (e.g., higher layer parameter density of Table 7), and/or information on a CDM type (e.g., higher layer parameter cdm-Type of Table 7).

For example, an operation of the base station to transmit the configuration information in step S2001 may be implemented by a device of FIGS. 21 to 24. For example, referring to FIG. 22, one or more processors 102/202 may control one or more memories 104/204 and/or one or more transceivers 106/206 so as to transmit the configuration information.

And/or, the base station (100/200 of FIGS. 21 to 24) may determine at least one code division multiplexing (CDM) group based on the configuration information, in step S2002. For example, the base station may determine the at least one CDM group (e.g., CDM group index/time/frequency locations of CDM group/the number of CDM groups) based on the configuration information and Table 9. For example, the detailed operation determining the at least one CDM group may refer to the contents of the CSI related operation described above.

For example, an operation of the base station to determine the at least one CDM group in step S2002 may be implemented by the device of FIGS. 21 to 24. For example, referring to FIG. 22, one or more processors 102/202 may determine the at least one CDM group. And/or, one or more processors 102/202 may control one or more memories 104/204 and/or one or more transceivers 106/206 so as to determine the at least one CDM group.

And/or, the base station (100/200 of FIGS. 21 to 24) may construct (and/or determine) CDM group sets based on the at least one CDM group, in step S2003.

For example, the base station may transmit, to the UE, information on the CDM group set (in order to construct the CDM group sets). And/or, the base station may construct CDM group sets using the at least one CDM group based on the information on the CDM group set. And/or, the information on the CDM group set may represent the number of CDM groups (e.g., N) corresponding to the same PRB. As above, the proposed method according to the present disclosure can reduce an actual frequency density of the CSI-RS to less than or equal to 0.5 through the information on the CDM group set (e.g., N), and flexibly adjust the actual frequency density. For example, if 32port/cdm4-FD2-TD2/density is assumed as 1, the total number of CDM groups equals 8, and the actual frequency density may be controlled to 1/0.5/0.25/0.125 by controlling 'N' to 8/4/2/1. And/or, if 32port/cdm4-FD2-TD2/density is assumed as 0.5, the actual frequency density may be controlled to 0.5/0.25/0.125/0.0625 by controlling 'N' to 8/4/2/1.

For example, since CDM group 0, CDM group 1, CDM group 2, and CDM group 3 of FIG. 9 correspond to the same PRB, they may construct one CDM group set. For example, CDM group 0 and CDM group 1 of FIG. 10 may construct a first CDM group set, and CDM group 2 and CDM group 3 of FIG. 10 may construct a second CDM group set.

And/or, the UE may receive the information on the CDM group set (e.g., N), and construct N CDM groups in index order into CDM group sets.

And/or, the configuration information may further include information on the frequency domain location (e.g., higher layer parameter frequencyDomainAllocation of Table 7) and/or information on the time domain location (e.g., higher layer parameter firstOFDMSymbolInTimeDomain/firstOFDMSymbolInTimeDomain2 of Table 7). And/or, the CDM group sets may be constructed based on a frequency domain location and/or a time domain location (or $(\overline{k,l})$ of Table 9) of at least one CDM group. For example, a detailed operation constructing the CDM group sets based on the frequency domain location and/or the time domain location may refer to the operation/method described above with reference to FIG. 12 (e.g., the first embodiment).

For example, an operation of the base station to construct the CDM group sets in step S2003 may be implemented by the device of FIGS. 21 to 24. For example, referring to FIG. 22, one or more processors 102/202 may construct the CDM group sets. And/or, one or more processors 102/202 may control one or more memories 104/204 and/or one or more transceivers 106/206 so as to construct the CDM group sets.

And/or, the base station (100/200 of FIGS. 21 to 24) may determine a physical resource block (PRB) related to the CDM group sets, in step S2004. And/or, a different CDM group set may correspond to a different PRB. In the present disclosure, the 'PRB' may include 'one or more PRBs'.

For example, the base station may transmit, to the UE, resource information on the CDM group set (in order to determine the PRB). And/or, the base station may determine the PRB related to the CDM group sets based on bitmaps (included in the resource information). And/or, the resource information may include bitmaps representing a PRB related to each CDM group set within the CSI-RS resource. For example, the CSI-RS resource may mean a PRB occupied for CSI-RS transmission. For example, the CSI-RS resource may be determined based on higher layer parameters nrofRBs, startingRB, and density.

For example, referring to FIG. 11, the CSI-RS resource may mean PRB0, PRB2, PRB4, PRB6, PRB8, PRB10, PRB12, and PRB14. For the Case 2, the resource information may include bitmap '00001111' for a first CDM group set (i.e., CGS0) and bitmap '11110000' for a second CDM group set (i.e., CGS1). For example, the corresponding bitmap may correspond to a PRB in which least significant bit (LSB) is the lowest. The base station may determine PRBs related to the first CDM group set and the second CDM group set based on the resource information. That is, the first CDM group set may correspond to PRB0, PRB2, PRB4, and PRB6, and the second CDM group set may correspond to PRB8, PRB10, PRB12, and PRB 14. More detailed operation may refer to the contents described with reference to FIG. 11 (e.g., the first embodiment).

And/or, the CDM group sets may include the first CDM group set and the second CDM group set. The first CDM group set may correspond to an odd-numbered PRB within the CSI-RS resource, and the second CDM group set may correspond to an even-numbered PRB within the CSI-RS resource. For example, referring to FIG. 10, the first CDM group set (i.e., CDM group 0 and CDM group 1) may correspond to PRB0, PRB4, PRB8, and PRB12, and the first CDM group set (i.e., CDM group 2 and CDM group 3) may correspond to PRB2, PRB6, PRB10, and PRB14.

And/or, a CSI-RS (or a sequence of a CSI-RS) may be generated based on a PRB corresponding to at least one CDM group set. For example, referring to FIG. 14, when it is applied to the CSI-RS resource of the Case 2, r(0), r(1) may correspond to PRB0, r(2),r(3) may correspond to PRB2, r(4),r(5) may correspond to PRB4, ..., r(14),r(15) may correspond to PRB14. For example, the sequence of the CSI-RS may be generated based on PRBs corresponding to CDM group sets.

For example, an operation of the base station to determine the PRB in step S2004 may be implemented by the device of FIGS. 21 to 24. For example, referring to FIG. 22, one or more processors 102/202 may determine the PRB. And/or, one or more processors 102/202 may control one or more memories 104/204 and/or one or more transceivers 106/206 so as to determine the PRB.

And/or, the base station (100/200 of FIGS. 21 to 24) may transmit, to the UE, the CSI-RS based on the CDM group sets in the PRB, in step S2005. For example, the base station may transmit the CSI-RS based on at least one antenna port included in at least one CDM group within each CDM group set on the PRB corresponding to each CDM group set. A detailed operation may refer to the contents of the CSI related operation, etc. described above.

For example, an operation of the base station to transmit the CSI-RS in step S2005 may be implemented by the device of FIGS. 21 to 24. For example, referring to FIG. 22, one or more processors 102/202 may control one or more memories 104/204 and/or one or more transceivers 106/206 so as to transmit the CSI-RS.

The operation of the base station described with reference to FIG. 20 may refer to the contents of the CSI related operation, etc. described above.

Since the operation of the base station described with reference to FIG. 20 is the same as the operation of the base station described with reference to FIGS. 1 to 19 (e.g., the first to third embodiments), other detailed descriptions are omitted.

The signaling and operation described above may be implemented by a device (e.g., FIGS. 21 to 24) to be described later. For example, the signaling and operation described above may be processed by one or more processors of FIGS. 21 to 24. Further, the signaling and operation described above may be stored in a memory in the form of commands/programs (e.g., instructions, executable codes) for running one or more processors of FIGS. 21 to 24.

For example, a processing apparatus configured to control a base station to transmit a channel state information-reference signal (CSI-RS) in a wireless communication system comprises at least one processor, and at least one memory operably connected to the at least one processor, wherein the at least one memory is configured to store instructions performing operations based on being executed by the at least one processor. The operations comprise transmitting, to a UE, configuration information for a CSI-RS resource, the configuration information including information on a number of antenna ports, information on a density, and information on a code division multiplexing (CDM) type, determining at least one CDM group based on the configuration information, constructing CDM group sets based on the at least one CDM group, determining a physical resource block (PRB) related to the CDM group sets, wherein a different CDM group set is related to a different PRB, and transmitting, to the UE, the CSI-RS based on the CDM group sets in the PRB.

For another example, in a computer readable storage medium storing at least one instruction allowing at least one processor to control operation based on being executed by the at least one processor, the operations comprise transmitting, to a UE, configuration information for a CSI-RS resource, the configuration information including information on a number of antenna ports, information on a density, and information on a code division multiplexing (CDM) type, determining at least one CDM group based on the configuration information, constructing CDM group sets based on the at least one CDM group, determining a physical resource block (PRB) related to the CDM group sets, wherein a different CDM group set is related to a different PRB, and transmitting, to the UE, the CSI-RS based on the CDM group sets in the PRB.

**Examples of communication system to which the present disclosure is applied**

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 21 illustrates a communication system applied to the present disclosure.

Referring to FIG. 21, a communication system applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. Relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

**Examples of wireless device to which the present disclosure is applied**

FIG. 22 illustrates wireless devices applicable to the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 1010x and the BS 200} and/or {the wireless device 1010x and the wireless device 1010x} of FIG. 22.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include at least one processor 202 and at least one memory 204 and additionally further include at least one transceiver 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 206 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. From RF band signals into baseband signals in order to process received user data, control information, radio signals/channels, etc. Using the one or more processors 102 and 202. The one or more transceivers 106 and 206 may convert the user data, control information, radio signals/channels, etc. Processed using the one or more processors 102 and 202 from the base band signals into the RF band signals. To this end, the one or more transceivers 106 and 206 may include (analog) oscillators and/or filters.

**Application examples of wireless device to which the present disclosure is applied**

FIG. 23 illustrates another example of a wireless device applied to the present disclosure. The wireless device may be implemented in various forms according to a use-case/service.

Referring to FIG. 23, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 104 of FIG. 16. For example, the transceiver(s) 114 may include the one or more transceivers 106 and 106 and/or the one or more antennas 108 and 108 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110).

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 15), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 100, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 100 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

**Examples of portable device to which the present disclosure is applied**

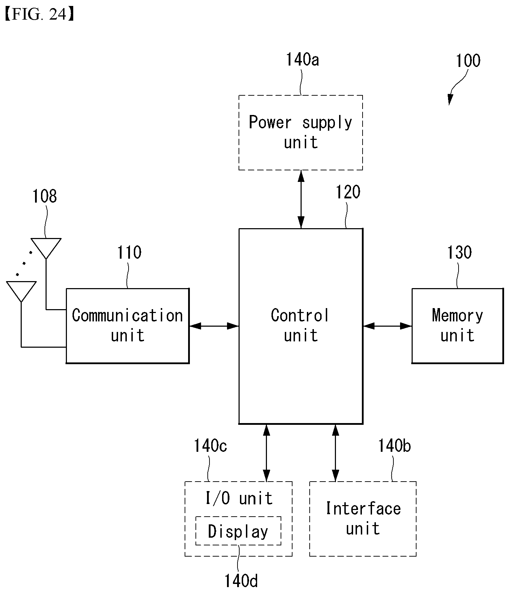

FIG. 24 llustrates a portable device applied to the present disclosure. The portable device may include a smart phone, a smart pad, a wearable device (e.g., a smart watch, a smart glass), and a portable computer (e.g., a notebook, etc.). The portable device may be referred to as a Mobile Station (MS), a user terminal (UT), a Mobile Subscriber Station (MSS), a Subscriber Station (SS), an Advanced Mobile Station (AMS), or a Wireless terminal (WT).

Referring to FIG. 24, a portable device 1010 may include an antenna unit 108, a communication unit 110, a control unit 120, a memory unit 130, a power supply unit 140a, an interface unit 140b, and an input/output unit 140c. The antenna unit 108 may be configured as a part of the communication unit 110. The blocks 110 to 130/140a to 140c correspond to the blocks 110 to 130/140 of FIG. 23, respectively.

The communication unit 110 may transmit/receive a signal (e.g., data, a control signal, etc.) to/from another wireless device and eNBs. The control unit 120 may perform various operations by controlling components of the portable device 1010. The control unit 120 may include an application processor (AP). The memory unit 130 may store data/parameters/programs/codes/instructions required for driving the portable device 1010. Further, the memory unit 130 may store input/output data/information, etc. The power supply unit 140a may supply power to the portable device 1010 and include a wired/wireless charging circuit, a battery, and the like. The interface unit 140b may support a connection between the portable device 1010 and another external device. The interface unit 140b may include various ports (e.g., an audio input/output port, a video input/output port) for the connection with the external device. The input/output unit 140c may receive or output a video information/signal, an audio information/signal, data, and/or information input from a user. The input/output unit 140c may include a camera, a microphone, a user input unit, a display unit 140d, a speaker, and/or a haptic module.

For example, in the case of data communication, the input/output unit 140c may acquire information/signal (e.g., touch, text, voice, image, and video) input from the user and the acquired information/signal may be stored in the memory unit 130. The communication unit 110 may transform the information/signal stored in the memory into the radio signal and directly transmit the radio signal to another wireless device or transmit the radio signal to the eNB. Further, the communication unit 110 may receive the radio signal from another wireless device or eNB and then reconstruct the received radio signal into original information/signal. The reconstructed information/signal may be stored in the memory unit 130 and then output in various forms (e.g., text, voice, image, video, haptic) through the input/output unit 140c.

A wireless communication technology implemented by a wireless device (e.g., 100, 200) according to the present disclosure may include narrowband Internet of Things for low power communication in addition to LTE, NR and 6G. In this case, for example, the NB-IoT technology may be an example of a low power wide area network (LPWAN) technology and may be implemented by standards such as LTE Cat NB1 and/or LTE Cat NB2, and the present disclosure is not limited to the aforementioned names. Additionally or alternatively, the wireless communication technology implemented by the wireless device (e.g., 100, 200) according to the present disclosure may perform communication based on the LTE-M technology. In this case, for example, the LTE-M technology may be an example of the LPWAN technology and may be called various names, such as enhanced Machine Type Communication (eMTC). For example, the LTE-M technology may be implemented by at least one of various standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and the present disclosure is not limited to the aforementioned names. Additionally or alternatively, the wireless communication technology implemented by the wireless device (e.g., 100, 200) according to the present disclosure may include at least one of ZigBee, Bluetooth and a low power wide area network (LPWAN) in which low power communication is considered, and the present disclosure is not limited to the aforementioned names. For example, the ZigBee technology may generate personal area networks (PAN) related to small/low-power digital communication based on various standards such as IEEE 802.15.4, and may be called various names.

The embodiments described above are implemented by combinations of components and features of the present disclosure in predetermined forms. Each component or feature should be considered selectively unless specified separately. Each component or feature may be carried out without being combined with another component or feature. Moreover, some components and/or features are combined with each other and may implement embodiments of the present disclosure. The order of operations described in embodiments of the present disclosure may be changed. Some components or features of one embodiment may be included in another embodiment, or may be replaced by corresponding components or features of another embodiment. It is apparent to constitute an embodiment by combining claims that are not explicitly cited in the claims or to be included as a new claim by amendment after filing.

Embodiments of the present disclosure may be implemented by various means, for example, hardware, firmware, software, or combinations thereof. When embodiments are implemented by hardware, one embodiment of the present disclosure may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

When embodiments are implemented by firmware or software, one embodiment of the present disclosure may be implemented by modules, procedures, functions, etc. performing functions or operations described above. Software code may be stored in a memory and may be driven by a processor. The memory is provided inside or outside the processor and may exchange data with the processor by various well-known means.

It is apparent to those skilled in the art that the present disclosure may be embodied in other specific forms without departing from essential features of the present disclosure. Accordingly, the aforementioned detailed description should not be construed as limiting in all aspects and should be considered as illustrative. The scope of the present disclosure should be determined by rational construing of the appended claims, and all modifications within an equivalent scope of the present disclosure are included in the scope of the present disclosure.

[Industrial Applicability]

Although a method of transmitting and receiving a CSI-RS in a wireless communication system according to the present disclosure has been described focusing on examples applying to the 3GPP LTE/LTE-A system and the 5G system (new RAT system), the present disclosure can be applied to various wireless communication systems, such as beyond 5G, 6G, and beyond 6G, in addition to these systems.

**Claims**

1. A method of a user equipment (UE) to receive a channel state information-reference signal (CSI-RS) in a wireless communication system, the method comprising:

   receiving, from a base station, configuration information for a CSI-RS resource, the configuration information including information on a number of antenna ports, information on a density, and information on a code division multiplexing (CDM) type;
   determining at least one CDM group based on the configuration information;
   constructing CDM group sets based on the at least one CDM group;
   determining a physical resource block (PRB) related to the CDM group sets, wherein a different CDM group set is related to a different PRB; and
   receiving, from the base station, the CSI-RS based on the CDM group sets in the PRB.

2. The method of claim 1, wherein determining the CDM group sets comprises:

   receiving, from the base station, information on a CDM group set, wherein the information on the CDM group set represents a number of CDM groups related to the same PRB; and
   constructing the CDM group sets with the at least one CDM group based on the information on the CDM group set.

3. The method of claim 1, wherein the configuration information further includes information on a frequency domain location and/or information on a time domain location, and
   wherein the CDM group sets are constructed based on a frequency domain location and/or a time domain location of the at least one CDM group.

4. The method of claim 1, wherein determining the PRB comprises:

   receiving, from the base station, resource information on a CDM group set, the resource information including bitmaps representing a PRB related to each CDM group set within the CSI-RS resource; and
   determining the PRB related to the CDM group sets based on the bitmaps.

5. The method of claim 1, wherein the CDM group sets include a first CDM group set and a second CDM group set, and
   wherein the first CDM group set is related to an odd-numbered PRB within the CSI-RS resource, and the second CDM group set is related to an even-numbered PRB within the CSI-RS resource.

**6.** The method of claim 1, wherein a sequence of the CSI-RS is generated based on a PRB related to at least one CDM group set.

**7.** A user equipment (UE) configured to receive a channel state information-reference signal (CSI-RS) in a wireless communication system, the UE comprising:

at least one transceiver;
at least one processor; and
at least one memory operably connected to the at least one processor,
wherein the at least one memory is configured to store instructions performing operations based on being executed by the at least one processor,
wherein the operations comprise:

receiving, from a base station, configuration information for a CSI-RS resource, the configuration information including information on a number of antenna ports, information on a density, and information on a code division multiplexing (CDM) type;
determining at least one CDM group based on the configuration information;
constructing CDM group sets based on the at least one CDM group;
determining a physical resource block (PRB) related to the CDM group sets, wherein a different CDM group set is related to a different PRB; and
receiving, from the base station, the CSI-RS based on the CDM group sets in the PRB.

**8.** A method of a base station to transmit a channel state information-reference signal (CSI-RS) in a wireless communication system, the method comprising:

transmitting, to a user equipment (UE), configuration information for a CSI-RS resource, the configuration information including information on a number of antenna ports, information on a density, and information on a code division multiplexing (CDM) type;
determining at least one CDM group based on the configuration information;
constructing CDM group sets based on the at least one CDM group;
determining a physical resource block (PRB) related to the CDM group sets, wherein a different CDM group set is related to a different PRB; and
transmitting, to the UE, the CSI-RS based on the CDM group sets in the PRB.

**9.** The method of claim 8, wherein constructing the CDM group sets comprises:

transmitting, to the UE, information on a CDM group set, wherein the information on the CDM group set represents a number of CDM groups related to the same PRB; and
constructing the CDM group sets with the at least one CDM group based on the information on the CDM group set.

**10.** The method of claim 8, wherein the configuration information further includes information on a frequency domain location and/or information on a time domain location, and
wherein the CDM group sets are constructed based on a frequency domain location and/or a time domain location of the at least one CDM group.

**11.** The method of claim 8, wherein determining the PRB comprises:

transmitting, to the UE, resource information on a CDM group set, the resource information including bitmaps representing a PRB related to each CDM group set within the CSI-RS resource; and
determining the PRB related to the CDM group sets based on the bitmaps.

**12.** The method of claim 8, wherein the CDM group sets include a first CDM group set and a second CDM group set, and
wherein the first CDM group set is related to an odd-numbered PRB within the CSI-RS resource, and the second CDM group set is related to an even-numbered PRB within the CSI-RS resource.

**13.** The method of claim 8, wherein a sequence of the CSI-RS is generated based on a PRB related to at least one CDM group set.

14. A base station configured to transmit a channel state information-reference signal (CSI-RS) in a wireless communication system, the base station comprising:

at least one transceiver;
at least one processor; and
at least one memory operably connected to the at least one processor,
wherein the at least one memory is configured to store instructions performing operations based on being executed by the at least one processor,
wherein the operations comprise:

transmitting, to a user equipment (UE), configuration information for a CSI-RS resource, the configuration information including information on a number of antenna ports, information on a density, and information on a code division multiplexing (CDM) type;
determining at least one CDM group based on the configuration information;
constructing CDM group sets based on the at least one CDM group;
determining a physical resource block (PRB) related to the CDM group sets, wherein a different CDM group set is related to a different PRB; and
transmitting, to the UE, the CSI-RS based on the CDM group sets in the PRB.

15. A processing apparatus configured to control a user equipment (UE) to receive a channel state information-reference signal (CSI-RS) in a wireless communication system, the processing apparatus comprising:

at least one processor; and
at least one memory operably connected to the at least one processor,
wherein the at least one memory is configured to store instructions performing operations based on being executed by the at least one processor,
wherein the operations comprise:

receiving, from a base station, configuration information for a CSI-RS resource, the configuration information including information on a number of antenna ports, information on a density, and information on a code division multiplexing (CDM) type;
determining at least one CDM group based on the configuration information;
constructing CDM group sets based on the at least one CDM group;
determining a physical resource block (PRB) related to the CDM group sets, wherein a different CDM group set is related to a different PRB; and
receiving, from the base station, the CSI-RS based on the CDM group sets in the PRB.

16. A computer readable storage medium storing at least one instruction allowing at least one processor to control operation based on being executed by the at least one processor,
wherein the operations comprise:

receiving, from a base station, configuration information for a channel state information-reference signal (CSI-RS) resource, the configuration information including information on a number of antenna ports, information on a density, and information on a code division multiplexing (CDM) type;
determining at least one CDM group based on the configuration information;
constructing CDM group sets based on the at least one CDM group;
determining a physical resource block (PRB) related to the CDM group sets, wherein a different CDM group set is related to a different PRB; and
receiving, from the base station, the CSI-RS based on the CDM group sets in the PRB.

【FIG. 1】

【FIG. 2】

$N_{TA}T_s$

【FIG. 3】

Radio Frame 10ms

Subframe 1ms

| 0 | 1 | 2 | 3 | 4 | 5 | 6 | 7 | 8 | 9 |

} Fixed Size

Subframe ={1, 2, 4} Slots

Slot

| 0 | 1 | 2 | 3 |

Slot={7, 14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2, 4, 7} Symbols - ffs

【FIG. 4】

One subframe

$14 \cdot 2^{\mu}$ OFDM symbols

$k = N_{RB}^{\mu} N_{SC}^{RB} - 1$

$N_{RB}^{\mu} N_{SC}^{RB} - 1$ Subcarriers

$N_{SC}^{RB}$ Subcarriers

Resource Block

Resource Element
-(k, l) in resource grid
-(k, l) in resource block

$k = 0$

$l = 0$

$l = 14 \cdot 2^{\mu} - 1$

【FIG. 5】

【FIG. 6】

Antenna port A
Antenna port B } Numerology X

Antenna port A
Antenna port B } Numerology Y

【FIG. 7】

INITIAL CELL SEARCH | SYSTEM INFORMATION RECEPTION | RANDOM ACCESS PROCEDURE | GENERAL DL/UL Tx/Rx

PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH

S701  S702  S703  S704  S705  S706  S707  S708

· DL/UL ACK/NACK
· UE CQI/PMI RI REPORT
  USING PUSCH AND PUCCH

【FIG. 8】

【FIG. 9】

PRB15
PRB14
PRB13
PRB12
PRB11
PRB10
PRB9
PRB8
PRB7
PRB6
PRB5
PRB4
PRB3
PRB2
PRB1
PRB0

nrofRBs

startingRB

density

l=0 1 2 3 4 5 6 7 8 9 10 11 12 13

⬜ :CDM group 0    ⬜ :CDM group 1
⬜ :CDM group 2    ⬜ :CDM group 3

The same pattern for all PRBs

⬜ :Occupied PRB for CSI-RS transmission

【FIG. 10】

The same pattern for every 2nd PRB in two PRBs
(i.e., odd PRBs in occupied PRBs)

The same pattern for every 1st PRB in two PRBs
(i.e., even PRBs in occupied PRBs)

:CDM group 0    :CDM group 1

:CDM group 2    :CDM group 3

nrofRBs

startingRB

density

:Occupied PRB for
CSI-RS transmission

[FIG. 11]

8-bit bit-map for configuration/indication of transmission (or omission) PRB(s)

PRB15 PRB14 PRB13 PRB12 PRB11 PRB10 PRB9 PRB8 PRB7 PRB6 PRB5 PRB4 PRB3 PRB2 PRB1 PRB0

nrofRBs

startingRB

density

: Occupied PRB for CSI-RS transmission

Case 1:

| CGS* # | Bit-map |
|---|---|
| 0 | 01010101 |
| 1 | 10101010 |

Case 2:

| CGS* # | Bit-map |
|---|---|
| 0 | 00001111 |
| 1 | 11110000 |

*CGS: CDM group set

Case 1:

PRB15 PRB14 PRB13 PRB12 PRB11 PRB10 PRB9 PRB8 PRB7 PRB6 PRB5 PRB4 PRB3 PRB2 PRB1 PRB0

Case 2:

PRB15 PRB14 PRB13 PRB12 PRB11 PRB10 PRB9 PRB8 PRB7 PRB6 PRB5 PRB4 PRB3 PRB2 PRB1 PRB0

(e.g., LSB-lowest occupied PRB)

: transmission PRB for CGS0

: transmission PRB for CGS1

【FIG. 12】

(a)

(b)

(c)

(d)

[FIG. 13]

Periodicity

Offset

☐ :Occupied slot for CSI-RS transmission

▨ :transmission slot for CGS0

▤ :transmission slot for CGS1

【FIG. 14】

$$a_{k,l}^{(p,\mu)} = \beta_{CSIRS}\,{}^{w}_{f}(k')\cdot{}^{w}_{t}(l')\cdot r_{l,n_{s,f}}(m')$$

$$m' = \lfloor na \rfloor + k' + \left\lfloor \frac{\bar{k}\rho}{N_{sc}^{RB}} \right\rfloor$$

$$k = nN_{sc}^{RB} + \bar{k} + k'$$

$$l = \bar{l} + l'$$

$$a = \begin{cases} \rho & \text{for } X = 1 \\ 2\rho & \text{for } X > 1 \end{cases}$$

$$n = 0, 1, \ldots$$

| CRB | PRB | | | Case 1) | Case 2) | Case 3) |
|---|---|---|---|---|---|---|
| CRB31 | | r (62) | r (63) | | | |
| CRB30 | | r (60) | r (61) | | | |
| CRB29 | | r (58) | r (59) | | | |
| CRB28 | | r (56) | r (57) | | | |
| CRB27 | PRB15 | r (54) | r (55) | r (54) r (55) | | |
| CRB26 | PRB14 | r (52) | r (53) | r (52) r (53) | r (52) r (53) | r (52) r (53) |
| CRB25 | PRB13 | r (50) | r (51) | r (50) r (51) | | |
| CRB24 | PRB12 | r (48) | r (49) | r (48) r (49) | r (48) r (49) | r (48) r (49) |
| CRB23 | PRB11 | r (46) | r (47) | r (46) r (47) | | |
| CRB22 | PRB10 | r (44) | r (45) | r (44) r (45) | r (44) r (45) | r (44) r (45) |
| CRB21 | PRB9 | r (42) | r (43) | r (42) r (43) | | |
| CRB20 | PRB8 | r (40) | r (41) | r (40) r (41) | r (40) r (41) | r (40) r (41) |
| CRB19 | PRB7 | r (38) | r (39) | r (38) r (39) | | |
| CRB18 | PRB6 | r (36) | r (37) | r (36) r (37) | r (36) r (37) | r (36) r (37) |
| CRB17 | PRB5 | r (34) | r (35) | r (34) r (35) | | |
| CRB16 | PRB4 | r (32) | r (33) | r (32) r (33) | r (32) r (33) | r (32) r (33) |
| CRB15 | PRB3 | r (30) | r (31) | r (30) r (31) | | |
| CRB14 | PRB2 | r (28) | r (29) | r (28) r (29) | r (28) r (29) | r (28) r (29) |
| CRB13 | PRB1 | r (26) | r (27) | r (26) r (27) | | |
| CRB12 | PRB0 | r (24) | r (25) | r (24) r (25) | r (24) r (25) | r (24) r (25) |
| CRB11 | | r (22) | r (23) | Case 1) density 1 | Case 2) density 1/2 | Case 3) density 1/2 with proposed scheme |
| CRB10 | | r (20) | r (21) | | | |
| CRB9 | | r (18) | r (19) | | | |
| CRB8 | | r (16) | r (17) | | | |
| CRB7 | | r (14) | r (15) | | | |
| CRB6 | | r (12) | r (13) | | | |
| CRB5 | | r (10) | r (11) | | | |
| CRB4 | | r (8) | r (9) | | | |
| CRB3 | | r (6) | r (7) | | | |
| CRB2 | | r (4) | r (5) | | | |
| CRB1 | | r (2) | r (3) | | | |
| CRB0 | | r (0) | r (1) | | | |

RS sequence
for X>1

:Occupied PRB for CSI-RS transmission

:transmission PRB for CGS0

:transmission PRB for CGS1

【FIG. 15】

(a)

:CDM group 0
:CDM group 1
:CDM group 2
:CDM group 3

(b)

:CDM group 0
:CDM group 1
:CDM group 2
:CDM group 3

(c)

:CDM group 0
:CDM group 1
:CDM group 2
:CDM group 3

【FIG. 16】

(a)

:CDM group 0
:CDM group 1
:CDM group 2
:CDM group 3

(b)

:CDM group 0
:CDM group 1
:CDM group 2
:CDM group 3

【FIG. 17】

【FIG. 18】

Legend: ▨ :DCI    ▤ :AP TRS    ▥ :CSI-RS for port selection codebook

(a)

(b)

【FIG. 19】

```
                    ( Start )
                        |
                        v
   +--------------------------------------------+
   | Receive configuration information for CSI-RS |——S1901
   |           resource from BS                  |
   +--------------------------------------------+
                        |
                        v
   +--------------------------------------------+
   | Determine at least one CDM group based on   |——S1902
   |           configuration information         |
   +--------------------------------------------+
                        |
                        v
   +--------------------------------------------+
   | Construct CDM group sets based on at least  |——S1903
   |              one CDM group                  |
   +--------------------------------------------+
                        |
                        v
   +--------------------------------------------+
   |   Determine PRB related to CDM group sets   |——S1904
   +--------------------------------------------+
                        |
                        v
   +--------------------------------------------+
   |  Receive CSI-RS from BS based on CDM group  |——S1905
   |              sets in PRB                     |
   +--------------------------------------------+
                        |
                        v
                    ( End )
```

【FIG. 20】

```
              ╭─────────╮
              │  Start  │
              ╰────┬────╯
                   │
                   ▼
┌──────────────────────────────────────┐
│ Transmit configuration information for CSI-RS │ ──── S2001
│            resource to UE            │
└──────────────────┬───────────────────┘
                   │
                   ▼
┌──────────────────────────────────────┐
│ Determine at least one CDM group based on │ ──── S2002
│         configuration information         │
└──────────────────┬───────────────────┘
                   │
                   ▼
┌──────────────────────────────────────┐
│  Construct CDM group sets based on at least │ ──── S2003
│              one CDM group           │
└──────────────────┬───────────────────┘
                   │
                   ▼
┌──────────────────────────────────────┐
│    Determine PRB related to CDM group sets    │ ──── S2004
└──────────────────┬───────────────────┘
                   │
                   ▼
┌──────────────────────────────────────┐
│  Transmit CSI-RS to UE based on CDM group │ ──── S2005
│              sets in PRB             │
└──────────────────┬───────────────────┘
                   │
                   ▼
              ╭─────────╮
              │   End   │
              ╰─────────╯
```

【FIG. 21】

1

100f
IoT device

100e
Home
Appliance

100d
Hand-held
device

400
AI Server
/device

Network
(5G)

300

120

120

120a

120

120

100c
XR device

100a
Robot

Vehicle
100b-1

Vehicle
100b-2

150a

150a

150a

150a

150a

150a

150a

150a

150b

【FIG. 22】

【FIG. 23】

Device(100, 200)

| Communication unit(110)<br>(e.g., 5G communication unit) | Control unit(120)<br>(e.g., processor(s)) |
|---|---|
| Communication circuit(112)<br>(e.g., processor(s),memory(s)) | Memory unit(130)<br>(e.g., RAM, storage) |
| Transceiver(s)(114)<br>(e.g., RF unit(s),antenna(s)) | Additional components(140)<br>(e.g., power unit/battery,<br>I/O unit,driving unit,<br>computing unit) |

【FIG. 24】

## INTERNATIONAL SEARCH REPORT

| International application No. |
|---|
| **PCT/KR2021/019175** |

**A.    CLASSIFICATION OF SUBJECT MATTER**

**H04L 5/00**(2006.01)i; **H04L 1/00**(2006.01)i

According to International Patent Classification (IPC) or to both national classification and IPC

**B.    FIELDS SEARCHED**

Minimum documentation searched (classification system followed by classification symbols)

H04L 5/00(2006.01); H04B 17/336(2014.01); H04B 7/0456(2017.01); H04B 7/06(2006.01); H04W 72/08(2009.01); H04W 76/27(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 채널 상태 정보-참조 신호(CSI-RS), 코드 분할 다중화(code division multiplexing, CDM), 그룹(group), 집합(set), 물리 자원 블록(physical resource block, PRB), 매핑(mapping)

**C.    DOCUMENTS CONSIDERED TO BE RELEVANT**

| Category* | Citation of document, with indication, where appropriate, of the relevant passages | Relevant to claim No. |
|---|---|---|
| A | US 2020-0382190 A1 (APPLE INC.) 03 December 2020 (2020-12-03)<br>    See paragraphs [0026] and [0028]; and claims 40-41. | 1-16 |
| A | US 2019-0253220 A1 (ELECTRONICS AND TELECOMMUNICATIONS RESEARCH INSTITUTE) 15 August 2019 (2019-08-15)<br>    See claims 1-10. | 1-16 |
| A | US 2019-0357221 A1 (INTEL CORPORATION) 21 November 2019 (2019-11-21)<br>    See claims 31-53. | 1-16 |
| A | US 2020-0382182 A1 (ZTE CORPORATION) 03 December 2020 (2020-12-03)<br>    See paragraphs [0061]-[0063]. | 1-16 |
| DA | 3GPP; TSG RAN; NR; Physical layer procedures for data (Release 16). 3GPP TS 38.214 V16.3.0. 02 October 2020.<br>    See pages 38-41 and 139-141. | 1-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 March 2022** | **28 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2021/019175**

| Patent document cited in search report | | | Publication date (day/month/year) | Patent family member(s) | | | Publication date (day/month/year) |
|---|---|---|---|---|---|---|---|
| US | 2020-0382190 | A1 | 03 December 2020 | CN | 110603777 | A | 20 December 2019 |
| | | | | EP | 3619872 | A1 | 11 March 2020 |
| | | | | US | 11139876 | B2 | 05 October 2021 |
| | | | | WO | 2018-204931 | A1 | 08 November 2018 |
| US | 2019-0253220 | A1 | 15 August 2019 | US | 10999036 | B2 | 04 May 2021 |
| US | 2019-0357221 | A1 | 21 November 2019 | WO | 2018-057494 | A1 | 29 March 2018 |
| US | 2020-0382182 | A1 | 03 December 2020 | CN | 111566975 | A | 21 August 2020 |
| | | | | WO | 2019-157710 | A1 | 22 August 2019 |

Form PCT/ISA/210 (patent family annex) (July 2019)